(19)
Europäisches Patentamt
European Patent Office
Office européen des brevets

(11) EP 0 620 111 B1

(12) **EUROPÄISCHE PATENTSCHRIFT**

(45) Veröffentlichungstag und Bekanntmachung des Hinweises auf die Patenterteilung: **06.10.1999 Patentblatt 1999/40**

(51) Int. Cl.[6]: **B32B 27/32**

(21) Anmeldenummer: **94105267.2**

(22) Anmeldetag: **05.04.1994**

(54) **Opake, matte Polypropylen-Mehrschichtfolie, Verfahren zu ihrer Herstellung und ihre Verwendung**

Opaque, matte polypropylene laminate, its manufacture and use

Feuille multicouche opaque et matte en polypropylène, sa fabrication et son utilisation

(84) Benannte Vertragsstaaten:
**BE DE ES FR GB IT NL**

(30) Priorität: **10.04.1993 DE 4311950**

(43) Veröffentlichungstag der Anmeldung:
**19.10.1994 Patentblatt 1994/42**

(73) Patentinhaber:
**Hoechst Trespaphan GmbH**
**66539 Neunkirchen (DE)**

(72) Erfinder:
- **Schumann, Detlef Erich, Dr.**
  **D-65399 Kiedrich (DE)**
- **Wilhelm, Adolf**
  **D-65199 Wiesbaden (DE)**
- **Murschall, Ursula, Dr.**
  **D-55283 Nierstein (DE)**
- **Peiffer, Herbert, Dr..**
  **D-55126 Mainz (DE)**
- **Wolfgang, Meyer**
  **D-66386 St. Ingbert (DE)**

(74) Vertreter:
**Luderschmidt, Schüler & Partner GbR**
**Patentanwälte,**
**Postfach 3929**
**65029 Wiesbaden (DE)**

(56) Entgegenhaltungen:
**EP-A- 0 180 087**
**EP-A- 0 228 041**
**EP-A- 0 367 613**
**EP-A- 0 619 183**
**US-A- 4 582 752**

- **PATENT ABSTRACTS OF JAPAN vol. 016, no. 306 (M-1276)6. Juli 1992 & JP-A-04 086 260 (TOYO SEIKAN K. LTD.) 18. März 1992**
- **DATABASE WPI Week 9141, Derwent Publications Ltd., London, GB; AN 91-298804 & JP-A-3 197 541 (IDEMITSU PETROCHEM KK) 28. August 1991**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 620 111 B1

Printed by Xerox (UK) Business Services
2.16.7/3.6

## Beschreibung

Die Erfindung betrifft eine coextrudierte opake Polypropylen-Mehrschichtfolie, welche mindestens eine Basisschicht, enthaltend Polypropylen, oder eine Polypropylenmischung, und Füllstoffe, und mindestens eine Zwischenschicht sowie mindestens eine auf dieser Zwischenschicht aufgebrachte Deckschicht umfaßt, wobei die Deckschicht im wesentlichen

ein Propylenhomopolymeres oder
ein Copolymeres von

Ethylen und Propylen oder
Ethylen und Butylen oder
Propylen und Butylen oder
Ethylen und einem anderen $\alpha$-Olefin mit 5 bis 10 Kohlenstoffatomen oder
Propylen und einem anderen $\alpha$-Olefin mit 5 bis 10 Kohlenstoffatomen oder

ein Terpolymeres von

Ethylen und Propylen und Butylen oder
Ethylen und Propylen und einem anderen $\alpha$-Olefin mit 5 bis 10 Kohlenstoffatomen oder

eine Mischung aus zwei oder mehreren der genannten Homo-, Co- und Terpolymeren oder
ein Blend aus zwei oder mehreren der genannten Homo-, Co- und Terpolymeren, gegebenenfalls gemischt mit einem oder mehreren der genannten Homo-, Co- und Terpolymeren,

enthält und die Zwischenschicht eine Mischung oder ein Blond zweier Komponenten I und II enthält.

Die Komponente I der Mischung bzw. des Blends ist ein Propylenhomopolymeres oder ein Copolymeres aus $\alpha$-Olefinen mit 2 bis 10 Kohlenstoffatomen oder ein Terpolymeres aus $\alpha$-Olefinen mit 2 bis 10 Kohlenstoffatomen oder eine Mischung aus zwei oder mehreren der genannten Homo-, Co- und Terpolymeren oder ein Blend aus zwei oder mehreren der genannten Homo-, Co- und Terpolymeren.

Die Komponente II der Mischung bzw. des Blends ist ein High Density Polyethylen (HDPE) oder ein Blend aus HDPE und einem oder mehreren weiteren Polymeren, ausgewählt aus der Gruppe Propylenhomopolymer, Copolymer aus $\alpha$-Olefinen mit 2 bis 10 Kohlenstoffatomen, Terpolymer aus $\alpha$-Olefinen mit 2 bis 10 Kohlenstoffatomen, und ein Blend aus Co- und Terpolymeren aus $\alpha$-Olefinen mit 2 bis 10 Kohlenstoffatomen.

Die erfindungsgemäße Folie zeichnet sich durch eine charakteristische matte Optik aus.

Die Erfindung betrifft ferner ein Verfahren zur Herstellung der Mehrschichtfolie sowie ihre Verwendung.

Die deutsche Patentanmeldung P 41 35 096.0 offenbart Polyolefin-Mehrschichtfolien aus einer Polypropylen-Basisschicht und einer Deckschicht aus einem HDPE-Blend. Dieses HDPE-Blend besteht aus HDPE und Co- und/oder Terpolymeren aus $\alpha$-Olefinen und gegebenenfalls Polypropylen. Die Deckschicht der Mehrschichtfolie weist einen minimalen Glanz und eine maximale Trübung auf, wodurch der Folie ein charakteristisches mattes Aussehen verliehen wird.

Aus der DE-A-16 94 694 sind Mehrschichtfolien bekannt, die aus biaxial orientierten Polypropylenfolien bestehen und mindestens eine heißsiegelfähige Schicht aus einem Ethylen-Propylen-Copolymeren enthalten. Diese Folien besitzen eine gute Heißsiegelbarkeit, sie sind klar und nicht im erwünschten Maße kratzfest und zeigen zudem ungenügende Verarbeitungseigenschaften auf schnellaufenden Verpackungsmaschinen.

Aus der EP-A-0 008 904 ist eine beidseitig siegelbare, biaxial orientierte dreischichtige Polyolefinfolie bekannt, bei der die Basisschicht aus Propylenpolymeren und die beiden Siegelschichten aus siegelbaren Olefinpolymeren gebildet sind. Diese Polyolefinfolie ist jedoch transparent und insbesondere nur wenig kratzfest und nicht bedruckbar. Darüber hinaus läßt sie auch hinsichtlich ihrer Gleiteigenschaften auf schnellaufenden Verpackungsmaschinen in verschiedener Weise zu wünschen übrig.

Eine weitere beidseitig siegelbare, biaxial orientierte Polyolefinfolie mit drei Schichten ist aus der US-A-4 419 411 bekannt. Bei diesen Folien ist in beiden Siegelschichten Polysiloxan und Siliciumdioxid als Additivkombination inkorporiert. Die Basisschicht besteht im wesentlichen aus Polypropylen und enthält eine geringe Menge Monocarbonsäureamid, welches teilweise von der Basisschicht in die beiden Siegelschichten migriert. Die beschriebene Polyolefin-Mehrschichtfolie soll einen besonders niedrigen Reibungskoeffizienten aufweisen. Dieser Folie haftet besonders der Nachteil an, daß sie nicht bedruckbar ist.

Aus der US-A-4 578 316 ist eine biaxial orientierte Polyolefin-Mehrschichtfolie bekannt, deren Basisschicht aus einem Polypropylen-Homopolymeren und deren Deckschicht aus einem Blend von Polypropylen und MDPE und/oder HDPE besteht. Diese Polyolefinfolie besitzt einen niedrigen Reibungskoeffizienten in Verbindung mit einer gut benetzbaren Oberfläche; jedoch weist auch dieser Film eine ausgezeichnete optische Transparenz auf.

In der WO 89/10839 werden Polyolefin-Mehrschichtfolien beschrieben, deren Basisschicht aus einem Propylenpolymeren und deren Deckschichten entweder aus HDPE oder einem Ethylen-Propylen-Copolymeren oder einem Polypropylen bestehen, wobei die Folie bei speziellen Temperaturbedingungen gestreckt wird. Sie besitzt insbesondere einen niedrigen Reibungskoeffizienten und eine gute Benetzbarkeit, aber gleichzeitig auch einen hohen Glanz und eine geringe Trübung.

Die EP-A-0 367 613 offenbart eine Mehrschichtfolie aus einer vakuolenhaltigen Polypropylen-Basisschicht und einer Deckschicht, welche beschriftbar ist und ein erstes Polymer mit einem Schmelzflußindex von $\geq$ 1 g/10 min und ein zweites Polymeres enthält, welches mit dem besagten ersten Polymeren inkompatibel ist. Als Beispiel für das erste Polymer ist ein HDPE mit einer Dichte von 0,92 bis 0,97 g/cm$^3$ beschrieben. Das inkompatible Polymer ist ein Polypropylen oder Copolymere des Propylens oder Terpolymere des Propylens. Die beschriebene Folie hat ein opakes Aussehen, d. h. sie ist im wesentlichen lichtundurchlässig. Es ist beschrieben, daß die Folie ein mattes Aussehen bekommt, wenn sie mit einer Bedruckung versehen wird. Es ist bevorzugt, in die Deckschicht zusätzlich einen Füllstoff einzuarbeiten, welcher die Beschreibbarkeit verbessern soll, wobei gleichzeitig die $SiO_2$-haltige Deckschicht eine hohe Mattigkeit aufweist, die der Folie ein papierähnliches Aussehen verleiht. Die beschriebene Folie weist eine Dichte von 0,69 g/cm$^3$ auf. Die matte, $SiO_2$-haltige Oberfläche erweist sich bei der Bedruckung als verbesserungswürdig. Die Farbe zeigt einen Grauschleier und kein gleichmäßiges Erscheinungsbild. Dies wird auf Inhomogenitäten zurückgeführt, welche in der Folie selbst durch ihre Opazität nicht so stark erscheinen, aber beim Bedrucken herauskommen. Die bedruckten Folien sind fleckig und werden vom Verarbeiter nicht akzeptiert.

Viele Folien nach dem Stand der Technik weisen den Nachteil des Auskreidens auf, d. h. auf den Folien bildet sich nach einigen Tagen eine Staubschicht, welche aus Partikeln besteht, die nicht aus der Umgebung, sondern aus der Folie selbst, insbesondere aus deren Deckschichten, stammen.

Alle Folien nach dem Stand der Technik sind verbesserungsbedürftig bezüglich ihrer ökonomischen Nachteile und ihrer Variationsmöglichkeiten. Das optische Erscheinungsbild herkömmlicher Folien kann durch geeignete Maßnahmen variiert werden, beispielsweise läßt sich der Weißgrad einer Folie durch Einarbeitung von $TiO_2$ in die Deckschicht erhöhen. Solche Modifikationen führen jedoch in der Regel nicht nur zu der gewünschten Änderung, sondern beeinflussen auch andere Folieneigenschaften zwangsläufig, z. B. verändert $TiO_2$ in der Deckschicht neben dem Weißgrad auch die Rauhigkeit und damit die Laufeigenschaften der Folie. Diese teilweise sehr unerwünschten Nebeneffekte führen dazu, daß die Verarbeiter die Verarbeitungsbedingungen für jeden Folientyp neu optimieren müssen, d. h. im einzelnen Verpackungsmaschinen neu einstellen oder Druckfarbenzusammensetzungen ändern usw. Solche notwendigen Maßnahmen wurden bisher als selbstverständlich und unumgänglich angesehen.

Die Aufgabe der vorliegenden Erfindung bestand daher darin, eine Mehrschichtfolie zur Verfügung zu stellen, die durch ein mattes Erscheinungsbild der Folie gekennzeichnet ist. Der Glanz der Folie soll im Hinblick auf diese gewünschte matte Charakteristik optimiert sein. Dabei ist gleichzeitig eine homogene Folienoptik ohne fleckige oder streifige Störstellen wichtig. Zusätzlich werden gute Oberflächeneigenschaften, insbesondere eine hohe und langzeitbeständige Oberflächenspannung der Deckschicht gefordert, damit deren gute Bedruckbarkeit gewährleistet ist. Gleichzeitig wird ein gleichmäßiges Erscheinungsbild der Bedruckung gefordert.

Je nach ihrem Verwendungszweck soll die Folie gegebenenfalls zusätzlich gute Siegeleigenschaften, insbesondere einen großen Siegelbereich und eine gute Heißsiegelbarkeit, aufweisen. Zusätzlich werden für den gegebenenfalls vorgesehenen Einsatz auf schnelllaufenden Verpackungsmaschinen gute Laufeigenschaften und eine geringe Reibung gefordert.

Erfindungsgemäß wird diese Aufgabe gelöst durch eine Mehrschichtfolie der eingangs genannten Gattung, wobei

die Komponente I im wesentlichen

ein Propylenhomopolymeres oder
ein Copolymeres von

Ethylen und Propylen oder
Ethylen und Butylen oder
Propylen und Butylen oder
Ethylen und einem anderen $\alpha$-Olefin mit 5 bis 10 Kohlenstoffatomen oder
Propylen und einem anderen $\alpha$-Olefin mit 5 bis 10 Kohlenstoffatomen oder

ein Terpolymeres von

Ethylen und Propylen und Butylen oder

Ethylen und Propylen und einem anderen α-Olefin mit 5 bis 10 Kohlenstoffatomen oder

eine Mischung aus zwei oder mehreren der genannten Homo-, Co- und Terpolymeren oder
ein Blend aus zwei oder mehreren der genannten Homo-, Co- und Terpolymeren, gegebenenfalls gemischt mit einem oder mehreren der genannten Homo-, Co- und Terpolymeren,

enthält und
die Komponente II im wesentlichen

ein HDPE oder
ein Blend zweier Blendkomponenten A und B enthält, wobei

die Blendkomponente A im wesentlichen

ein HDPE ist und

die Blendkomponente B im wesentlichen

ein Propylenhomopolymeres oder
ein Copolymeres von

Ethylen und Propylen oder
Ethylen und Butylen oder
Propylen und Butylen oder
Ethylen und einem anderen α-Olefin mit 5 bis 10 Kohlenstoffatomen oder
Propylen und einem anderen α-Olefin mit 5 bis 10 Kohlenstoffatomen oder

ein Terpolymeres von

Ethylen und Propylen und Butylen oder
Ethylen und Propylen und einem anderen α-Olefin mit 5 bis 10 Kohlenstoffatomen oder

eine Mischung aus zwei oder mehreren der genannten Homo-, Co- und Terpolymeren oder
ein Blend aus zwei oder mehreren der genannten Homo-, Co- und Terpolymeren

ist

und die Folie matt ist.

Unter Mischungen im Sinne der vorliegenden Erfindung sind mechanische Mischungen zu verstehen, welche aus den Einzelkomponenten hergestellt werden. Im allgemeinen werden hierzu die einzelnen Bestandteile als gepreßte Formkörper kleiner Größe, z. B. linsen-, kugel- oder stäbchenförmiges Granulat, zusammengeschüttet und mit einer geeigneten Rüttelvorrichtung mechanisch gemischt.

Ein Blend im Sinne der vorliegenden Erfindung ist ein legierungsartiger Verbund der einzelnen Komponenten, welcher nicht mehr in die ursprünglichen Bestandteile zerlegt werden kann. Ein Blend weist Eigenschaften wie ein homogener Stoff auf und kann entsprechend durch geeignete Parameter charakterisiert werden.

Die Basisschicht der erfindungsgemäßen Mehrschichtfolie enthält im wesentlichen ein Propylenpolymer oder eine Polypropylenmischung und Füllstoffe.

Das Propylenpolymere der Basisschicht enthält zum überwiegenden Teil (mindestens 90 %) Propylen und besitzt einen Schmelzpunkt von 140 °C oder höher, vorzugsweise 150 bis 170 °C. Isotaktisches Homopolypropylen mit einem n-heptanlöslichen Anteil von 6 Gew.-% und weniger, bezogen auf das isotaktische Homopolypropylen, Copolymere von Ethylen und Propylen mit einem Ethylengehalt von 10 Gew.-% oder weniger, Copolymere von Propylen mit $C_4$-$C_8$-α-Olefinen mit einem α-Olefingehalt von 10 Gew.-% oder weniger stellen bevorzugte Propylenpolymere für die Basisschicht dar, wobei isotaktisches Homopolypropylen besonders bevorzugt ist. Die angegebenen Gewichtsprozente beziehen sich auf das jeweilige Copolymer. Das Propylenpolymere der Kernschicht hat im allgemeinen einen Schmelzflußindex von 0,5 g/10 min bis 8 g/10 min, vorzugsweise 2 g/10 min bis 5 g/10 min, bei 230 °C und einer Kraft von 21,6 N (DIN 53 735).

Des weiteren ist eine Mischung aus den genannten Propylenhomo- und/oder -copolymeren und/oder anderen mit den Propylenpolymeren verträglichen Polyolefinen, insbesondere mit 2 bis 6 C-Atomen, geeignet, wobei die Mischung mindestens 50 Gew.-%, insbesondere mindestens 75 Gew.-%, Propylenpolymerisat enthält. Geeignete andere Polyolefine in der Polymermischung sind verträgliche Polyethylene, insbesondere HDPE, LDPE und LLDPE, wobei der Anteil dieser Polyolefine jeweils 15 Gew.-%, bezogen auf die Polymermischung, nicht übersteigt. "Verträglich" im Sinne der vorliegenden Erfindung bedeutet, daß das verträgliche Polymere in der Folie nicht als separate Phase vorliegt.

Gegebenenfalls kann das in der Basisschicht eingesetzte Propylenpolymere durch den Zusatz von organischen Peroxiden teilabgebaut werden. Ein Maß für den Grad des Abbaus des Polymeren ist der sogenannte Abbaufaktor A, welcher die relative Änderung des Schmelzflußindex nach DIN 53 735 des Polypropylens, bezogen auf das Ausgangspolymere, angibt.

$$A = \frac{MFI_2}{MFI_1}$$

$MFI_1$ = Schmelzflußindex des Propylenpolymeren vor dem Zusatz des organischen Peroxids
$MFI_2$ = Schmelzflußindex des peroxidisch abgebauten Propylenpolymeren

Im allgemeinen liegt der Abbaufaktor A des eingesetzten Propylenpolymeren in einem Bereich von 3 bis 15, vorzugsweise 6 bis 10.

Als organische Peroxide sind Dialkylperoxide besonders bevorzugt, wobei unter einem Alkylrest die üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-t-butylperoxid bevorzugt.

Die Polypropylen-Basisschicht enthält Füllstoffe im allgemeinen in einer Menge von 1 bis 30 Gew.-%, welche die Folie opak machen. "Opake Folie" bedeutet im Sinne der vorliegenden Erfindung eine undurchsichtige Folie, deren Lichtdurchlässigkeit (ASTM-D 1003-77) höchstens 30 %, vorzugsweise höchstens 50 %, beträgt.

Von dem Begriff "Füllstoffe" werden im Sinne der vorliegenden Erfindung vakuoleniniziierende feste Teilchen, im folgenden "feste Teilchen" genannt, und Pigmente umfaßt. Feste Teilchen sind mit der Polymermatrix unverträglich und führen beim Verstrecken der Folien zur Bildung von vakuolenartigen Hohlräumen, wobei Größe, Art und Anzahl der Vakuolen von der Größe der festen Teilchen und den Streckbedingungen wie Streckverhältnis und Strecktemperatur abhängig sind. Die Vakuolen geben den Folien ein charakteristisches perlmuttartiges, opakes Aussehen, welches durch Lichtstreuung an den Grenzflächen "Vakuole/Polymermatrix" entsteht. Die Lichtstreuung an den festen Teilchen selbst trägt zur Opazität der Folie im allgemeinen vergleichsweise wenig bei. In der Regel haben feste Teilchen eine Mindestgröße von 1 µm, um zu einer effektiven, d. h. opak machenden Größe und Menge an Vakuolen zu führen. Im allgemeinen beträgt der mittlere Teilchendurchmesser der festen Teilchen 1 bis 6 µm, vorzugsweise 1,5 bis 5 µm. Der chemische Charakter der festen Teilchen spielt eine untergeordnete Rolle.

Pigmente sind ebenfalls mit der Polymermatrix unverträglich und umfassen solche Füllstoffe, die kaum zur Vakuolenbildung beim Verstrecken führen. Die färbende Wirkung der Pigmente wird durch die Teilchen selbst verursacht. Der Begriff "Pigment" ist im allgemeinen an eine Teilchengröße von 0,01 bis maximal 1 µm gebunden und umfaßt sowohl sogenannte "Weißpigmente", welche die Folien weiß einfärben, als auch "Buntpigmente", welche der Folie eine bunte oder schwarze Farbe verleihen. Im allgemeinen liegt der mittlere Teilchendurchmesser der Pigmente im Bereich von 0,01 bis 1 µm, vorzugsweise von 0,01 bis 0,5 µm.

Somit ist die Unterteilung der Füllstoffe in die beiden Gruppen "feste Teilchen" und "Pigmente" eine Klassifizierung nach ihrer Funktionalität, die u. a. von der Teilchengröße abhängig ist. Feste Teilchen machen Folien durch Vakuolenbildung opak. Pigmente färben die Folie und machen sie dadurch undurchsichtig. Beide Teilchenarten werden unter dem Oberbegriff "Füllstoffe" zusammengefaßt.

Übliche Füllstoffe der Basisschicht sind anorganische und/oder organische, mit Polypropylen unverträgliche Materialien wie Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Calciumcarbonat, Siliciumdioxid und Titandioxid bevorzugt eingesetzt werden. Als organische Füllstoffe kommen die üblicherweise verwendeten, mit dem Polymeren der Basisschicht unverträglichen Polymeren in Frage, insbesondere solche wie HDPE, Polyester, Polystyrole, Polyamide, halogenierte organische Polymere, wobei Polyester wie beispielsweise Polybutylenterephthalate bevorzugt sind. "Unverträgliche Materialien bzw. unverträgliche Polymere" im Sinne der vorliegenden Erfindung bedeutet, daß das Material bzw. das Polymere in der Folie als separates Teilchen bzw. als separate Phase vorliegt.

Die Füllstoffmenge der Basisschicht liegt im allgemeinen im Bereich von 1 bis 30 Gew.-%, wobei die einzelnen Ausführungsformen je nach Einsatzzweck der Folie oder aktuellem Modetrend nur feste Teilchen oder nur Pigmente oder eine Kombination aus festen Teilchen und Pigmenten in der Basisschicht enthalten können.

Folien, welche nur mit Pigment ausgerüstet sind (pigmentierte Folien), enthalten dieses im allgemeinen in einer Menge von 2 bis 25 Gew.-%, insbesondere 3 bis 20 Gew.-%, bevorzugt 5 bis 15 Gew.-%, jeweils bezogen auf die Basisschicht. Als Pigmente sind Weißpigmente, insbesondere $TiO_2$ und $BaSO_4$ bevorzugt. $TiO_2$ hat bevorzugt einen mittleren Teilchendurchmesser von 0,01 bis 0,7 µm, insbesondere 0,1 bis 0,5 µm.

Folien, welche nur mit vakuoleniniziierenden festen Teilchen ausgerüstet sind, enthalten diese im allgemeinen in einer Menge von 1 bis 25 Gew.-%. Für übliche Verpackungsfolien ist ein Gehalt an festen Teilchen von 2 bis 5 Gew.-% bevorzugt. Für spezielle Anwendungen, z. B. Folien für Etiketten, werden auch hochgefüllte Folien mit 9 bis 14 Gew.-% festen Teilchen bevorzugt. Als vakuoleniniziierende Teilchen sind $CaCO_3$, $SiO_2$, Polyamide und Polybutylenterephthalate bevorzugt. Besonders vorteilhaft ist $CaCO_3$, insbesondere $CaCO_3$ einer mittleren Teilchengröße von 1,5 bis 5 µm.

Folien, welche mit vakuoleniniziierenden festen Teilchen und mit Pigment ausgerüstet sind, enthalten feste Teilchen in einer Menge von 1 bis 10 Gew.-%, bevorzugt 1 bis 5 Gew.-%, und Pigment in einer Menge von 1 bis 7 Gew.-%, bevorzugt 1 bis 5 Gew.-%. Für solche Folientypen ist eine Kombination aus $CaCO_3$ als feste Teilchen und $TiO_2$ als Pigment bevorzugt. Dieser Folientyp wird auch als opak-weiße Folie bezeichnet.

Die Dichte der füllstoffhaltigen Folien kann innerhalb weiter Grenzen variieren und hängt von der Art und der Menge der Füllstoffe ab. Die Dichte liegt im allgemeinen im Bereich von 0,4 bis 1,1 g/cm$^3$.

Pigmentierte Folien haben eine Dichte in der Größenordnung von 0,9 g/cm$^3$ oder darüber, da die Pigmente nahezu keine dichtereduzierenden Vakuolen erzeugen, aber selbst eine höhere Dichte als Polypropylen haben können. Bevorzugt liegt die Dichte dieses Folientyps im Bereich von 0,9 bis 1,1 g/cm$^3$.

Folien, welche nur feste Teilchen enthalten, haben durch die Vakuolen eine gegenüber Polypropylen reduzierte Dichte von kleiner 0,9 g/cm$^3$. Für Verpackungsfolien mit einem herkömmlichen Gehalt an festen Teilchen von 2 bis 5 Gew.-% liegt die Dichte im Bereich von 0,7 bis 0,85 g/cm$^3$. Für hochgefüllte Folien mit einem Gehalt an festen Teilchen von 9 bis 14 Gew.-% liegt die Dichte im Bereich von 0,4 bis 0,7 g/cm$^3$.

Folien, welche Pigmente und feste Teilchen enthalten, insbesondere weiß-opake Folien, haben eine Dichte im Bereich von 0,6 bis 0,85 g/cm$^3$, je nach Verhältnis von Pigmentgehalt zu Gehalt an festen Teilchen.

Bevorzugte Ausführungsformen der pigmentierten Folien enthalten $TiO_2$ als Weißpigment. Ebenso ist $TiO_2$ für weiß-opake Folientypen bevorzugt. Die Titandioxidteilchen bestehen bevorzugt zu mindestens 95 Gew.-% aus Rutil und werden bevorzugt mit einem Überzug aus anorganischen Oxiden eingesetzt, wie er üblicherweise als Überzug für $TiO_2$-Weißpigment in Papieren oder Anstrichmitteln zur Verbesserung der Lichtechtheit verwendet wird. Zu den besonders geeigneten anorganischen Oxiden gehören die Oxide von Aluminium, Silicium, Zink oder Magnesium oder Mischungen aus zwei oder mehreren dieser Verbindungen. Sie werden aus wasserlöslichen Verbindungen, z. B. Alkali-, insbesondere Natriumaluminat, Aluminiumhydroxid, Aluminiumsulfat, Aluminiumnitrat, Natriumsilikat oder Kieselsäure, in der wäßrigen Suspension ausgefällt. $TiO_2$-Partikel mit einem Überzug werden z. B. in der EP-A-0 078 633 und EP-A-0 044 515 beschrieben.

Gegebenenfalls enthält der Überzug auch organische Verbindungen mit polaren und unpolaren Gruppen. Bevorzugte organische Verbindungen sind Alkanole und Fettsäuren mit 8 bis 30 C-Atomen in der Alkylgruppe, insbesondere Fettsäuren und primäre n-Alkanole mit 12 bis 24 C-Atomen, sowie Polydiorganosiloxane und/oder Polyorganohydrogensiloxane wie Polydimethylsiloxan und Polymethylhydrogensiloxan.

Der Überzug auf den $TiO_2$-Teilchen besteht gewöhnlich aus 1 bis 12 g, insbesondere 2 bis 6 g, anorganischer Oxide, gegebenenfalls sind zusätzlich 0,5 bis 3 g, insbesondere 0,7 bis 1,5 g, organische Verbindungen, jeweils bezogen auf 100 g $TiO_2$-Teilchen, enthalten. Als besonders vorteilhaft hat es sich erwiesen, wenn die $TiO_2$-Teilchen mit $Al_2O_3$ oder mit $Al_2O_3$ und Polydimethylsiloxan beschichtet sind.

Weiterhin kann die Basisschicht gegebenenfalls ein niedermolekulares Harz enthalten, dessen Anteil 1 bis 30 Gew.-%, vorzugsweise 2 bis 10 Gew.-%, beträgt. Der Erweichungspunkt des Harzes liegt zwischen 130 und 180 °C (gemessen nach DIN 1995-U4, entspricht ASTM E-28), vorzugsweise zwischen 140 und 160 °C. Unter den zahlreichen niedrigmolekularen Harzen sind die Kohlenwasserstoffharze bevorzugt, und zwar in Form der Erdölharze (Petroleumharze), Styrolharze, Cyclopentadienharze und Terpenharze (diese Harze sind in Ullmanns Encyklopädie der techn. Chemie, 4. Auflage, Band 12, Seiten 525 bis 555, beschrieben). Geeignete Erdölharze sind in zahlreichen Schriften beschrieben wie beispielsweise EP-A-0 180 087, auf die hier ausdrücklich Bezug genommen wird.

Die erfindungsgemäße Mehrschichtfolie umfaßt mindestens eine Zwischenschicht, welche eine im folgenden näher beschriebene Mischung bzw. ein Blend zweier Komponenten I und II und gegebenenfalls zugesetzte Füllstoffe und/oder Additive enthält.

Die Komponente I der Zwischenschichtmischung bzw. des Blends enthält im wesentlichen

ein Propylenhomopolymer oder
ein Copolymer von

Ethylen und Propylen oder
Ethylen und Butylen oder

Propylen und Butylen oder
Ethylen und einem anderen α-Olefin mit 5 bis 10 Kohlenstoffatomen oder
Propylen und einem anderen α-Olefin mit 5 bis 10 Kohlenstoffatomen oder

ein Terpolymer von

Ethylen und Propylen und Butylen oder
Ethylen und Propylen und einem anderen α-Olefin mit 5 bis 10 Kohlenstoffatomen oder

eine Mischung aus zwei oder mehreren der genannten Homo-, Co- und Terpolymeren oder
ein Blend aus zwei oder mehreren der genannten Homo-, Co- und Terpolymeren, gegebenenfalls gemischt mit einem oder mehreren der genannten

Homo-, Co- und Terpolymeren.

Besonders bevorzugt besteht die Komponente I im wesentlichen aus

einem Propylenhomopolymeren oder aus
einem Copolymeren von

Ethylen und Propylen oder
Ethylen und Butylen-1 oder
Propylen und Butylen-1 oder aus

einem Terpolymeren von

Ethylen und Propylen und Butylen-1 oder aus

einer Mischung aus zwei oder mehreren der genannten besonders bevorzugten Homo-, Co- und Terpolymeren oder aus
einem Blend aus zwei oder mehreren der genannten besonders bevorzugten Homo-, Co- und Terpolymeren, gegebenenfalls gemischt mit einem oder mehreren der genannten Homo-, Co- und Terpolymeren,

wobei insbesondere Propylenhomopolymer oder

statistische Ethylen-Propylen-Copolymere mit

einem Ethylengehalt von 2 bis 10 Gew.-%, bevorzugt 5 bis 8 Gew.-%, oder

statistische Propylen-Butylen-1-Copolymere mit

einem Butylengehalt von 4 bis 25 Gew.-%, bevorzugt 10 bis 20 Gew.-%,

jeweils bezogen auf das Gesamtgewicht des Copolymeren, oder
statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 3 bis 20 Gew.-%, bevorzugt 8 bis 10 Gew.-%,
jeweils bezogen auf das Gesamtgewicht des Terpolymeren, oder

ein Blend aus einem Ethylen-Propylen-Butylen-1-Terpolymeren und einem Propylen-Butylen-1-Copolymeren

mit einem Ethylengehalt von 0,1 bis 7 Gew.-%
und einem Propylengehalt von 50 bis 90 Gew.-%
und einem Butylen-1-Gehalt von 10 bis 40 Gew.-%,
jeweils bezogen auf das Gesamtgewicht des Polymerblends,

bevorzugt sind.

Das als oder in der Komponente I eingesetzte Propylenhomopolymere enthält zum überwiegenden Teil (mindestens 90 %) Propylen und besitzt einen Schmelzpunkt von 140 °C oder höher, vorzugsweise 150 bis 170 °C, wobei isotaktisches Homopolypropylen mit einem n-heptanlöslichen Anteil von 6 Gew.-% und weniger, bezogen auf das isotaktische Homopolypropylen, bevorzugt ist. Das Homopolymere der Komponente I bzw. das in dieser enthaltene Homopolymere hat im allgemeinen einen Schmelzflußindex von 0,5 g/10 min bis 15 g/10 min, vorzugsweise 1,5 g/10 min bis 6 g/10 min, bei 230 °C und einer Kraft von 21,6 N (DIN 53 735).

Die Komponente II der Zwischenschichtmischung bzw. des Blends enthält im wesentlichen ein HDPE oder ein Blend, welches im wesentlichen HDPE als Blendkomponente A und eine Blendkomponente B umfaßt.

Unter HDPE werden im Sinne der vorliegenden Erfindung Hochdruckpolyethylene verstanden, welche die folgenden Eigenschaften aufweisen:

1. Der Schmelzflußindex MFI, gemessen nach DIN 53 735 oder ISO 1133 bei 50 N/190 °C, liegt im Bereich von größer 1 bis 50 g/10 min, vorzugsweise 5 bis 45 g/10 min, insbesondere 5 bis 25 g/10 min.
2. Die Viskositätszahl, gemessen nach DIN 53 728, Teil 4, oder ISO 1191, liegt im Bereich von 100 bis 450 $cm^3/g$, vorzugsweise 120 bis 280 $cm^3/g$.
3. Die Kristallinität beträgt 35 bis 80 %, vorzugsweise 50 bis 80 %.
4. Die Dichte, gemessen bei 23 °C nach DIN 53 479, Verfahren A, oder ISO 1183, liegt im Bereich von 0,93 bis 0,97 $g/cm^3$, vorzugsweise 0,95 bis 0,96 $g/cm^3$.
5. Der Schmelzpunkt, gemessen mit DSC (Maximum der Schmelzkurve, Aufheizgeschwindigkeit 20 °C/min), liegt zwischen 120 und 150 °C, vorzugsweise zwischen 125 und 135 °C.

Das HDPE als Komponente II als auch HDPE als Blendkomponente A wird aus den vorstehend beschriebenen Polyethylenen ausgewählt, so daß als Komponente II grundsätzlich das gleiche HDPE wie als Blendkomponente A in Frage kommt, aber nicht identisch sein muß.

Die Blendkomponente B besteht im wesentlichen aus

einem Propylenhomopolymeren oder aus
einem Copolymeren von

Ethylen und Propylen oder
Ethylen und Butylen oder
Propylen und Butylen oder
Ethylen und einem anderen α-Olefin mit 5 bis 10 Kohlenstoffatomen oder
Propylen und einem anderen α-Olefin mit 5 bis 10 Kohlenstoffatomen oder aus

einem Terpolymeren von

Ethylen und Propylen und Butylen oder
Ethylen und Propylen und einem anderen α-Olefin mit 5 bis 10 Kohlenstoffatomen oder aus

einer Mischung aus zwei oder mehreren der genannten Homo-, Co- und Terpolymeren oder aus
einem Blend aus zwei oder mehreren der genannten Homo-, Co- und Terpolymeren.

Besonders bevorzugt besteht die Blendkomponente B im wesentlichen aus

einem Propylenhomopolymeren oder aus
einem Copolymeren von

Ethylen und Propylen oder
Ethylen und Butylen-1 oder
Propylen und Butylen-1 oder aus

einem Terpolymeren von

Ethylen und Propylen und Butylen-1 oder aus

einer Mischung aus zwei oder mehreren der genannten besonders bevorzugten Homo-, Co- und Terpolymeren oder aus
einem Blend aus zwei oder mehreren der genannten besonders bevorzugten Homo-, Co- und Terpolymeren,

wobei insbesondere Propylenhomopolymer oder

statistische Ethylen-Propylen-Copolymere mit

einem Ethylengehalt von 2 bis 10 Gew.-%, bevorzugt 5 bis 8 Gew.-%, oder

statistische Propylen-Butylen-1-Copolymere mit

einem Butylengehalt von 4 bis 25 Gew.-%, bevorzugt 10 bis 20 Gew.-%,

jeweils bezogen auf das Gesamtgewicht des Copolymeren, oder
statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 3 bis 20 Gew.-%, bevorzugt 8 bis 10 Gew.-%,
jeweils bezogen auf das Gesamtgewicht des Terpolymeren, oder

ein Blend aus einem Ethylen-Propylen-Butylen-1-Terpolymeren und einem Propylen-Butylen-1-Copolymeren

mit einem Ethylengehalt von 0,1 bis 7 Gew.-%
und einem Propylengehalt von 50 bis 90 Gew.-%
und einem Butylen-1-Gehalt von 10 bis 40 Gew.-%,
jeweils bezogen auf das Gesamtgewicht des Polymerblends,

bevorzugt sind.

Das als oder in der Blendkomponente B eingesetzte Propylenhomopolymere enthält zum überwiegenden Teil (mindestens 90 %) Propylen und besitzt einen Schmelzpunkt von 140 °C oder höher, vorzugsweise 150 bis 170 °C, wobei isotaktisches Homopolypropylen mit einem n-heptanlöslichen Anteil von 6 Gew.-% und weniger, bezogen auf das isotaktische Homopolypropylen, bevorzugt ist. Das Homopolymere der Blendkomponente B bzw. das in dieser enthaltene Homopolymere hat im allgemeinen einen Schmelzflußindex von 0,5 g/10 min bis 15 g/10 min, vorzugsweise 1,5 g/10 min bis 6 g/10 min, bei 230 °C und einer Kraft von 21,6 N (DIN 53 735).

Das Verhältnis (Gewichtsverhältnis) der beiden Blendkomponenten A und B liegt zwischen A:B = 20:80 und A:B = 80:20, vorzugsweise zwischen A:B = 40:60 und A:B = 60:40, und liegt insbesondere bevorzugt bei A:B = 45:55.

Das Blend aus den Komponenten A und B hat einen Schmelzflußindex (DIN 53 735 bei 230 °C und 21,6 N Belastung) von 1,5 g/10 min bis 12 g/10 min, vorzugsweise von 2,5 g/10 min bis 6 g/10 min, wobei der Schmelzflußindex des Blends bevorzugt höher liegt als jener des Propylenpolymeren der Basisschicht.

Der Schmelzbereich des Blends liegt zwischen 100 und 160 °C, vorzugsweise zwischen 120 und 150 °C.

Das Verhältnis (Gewichtsverhältnis) der beiden Komponenten I und II der Zwischenschichtmischung bzw. des Blends kann innerhalb weiter Grenzen variieren und richtet sich nach dem beabsichtigten Einsatzzweck der Mehrschichtfolie. Bevorzugt liegt das Verhältnis der Komponenten I und II in einem Bereich von I:II = 10:90 bis I:II = 90:10, vorzugsweise zwischen I:II = 30:70 bis I:II = 70:30, insbesondere bei I:II = 50:50.

Die vorstehend beschriebene Zwischenschicht der erfindungsgemäßen Mehrschichtfolie kann in einer weiteren Ausführungsform zusätzlich Füllstoffe, d. h. feste Teilchen und/oder Pigmente, enthalten, welche mit der Zwischenschichtmischung bzw. dem Blend unverträglich sind.

Der Zusatz dieser Füllstoffe in der Zwischenschicht führt in der Regel nicht zur Ausbildung von vakuolenartigen Hohlräumen. Das heißt, die füllstoffhaltige Zwischenschicht ist im wesentlichen vakuolenfrei. Für homopolymerhaltige Zwischenschichten mit Füllstoffen ist der Anteil an Homopolymer entsprechend gering zu halten, insbesondere, wenn feste Teilchen mit einem mittleren Teilchendurchmesser von >1 µm enthalten sind. Der Homopolymeranteil sollte in diesem Fall 25 Gew.-% nicht überschreiten und liegt vorzugsweise im Bereich von 5 bis 20 Gew.-%, jeweils bezogen auf die Zwischenschicht. Für füllstoffhaltige Zwischenschichten mit einem Homopolymeranteil von über 25 Gew.-%, bezogen auf die Zwischenschicht, müssen Füllstoffe mit entsprechend kleinem mittlerem Teilchendurchmesser ausgewählt werden, d. h. diese Zwsichenschichten enthalten bevorzugt im wesentlichen nur Pigmente.

Als Füllstoffe für die erfindungsgemäße Zwischenschicht kommen grundsätzlich die vorstehend für die Basisschicht beschriebenen Füllstoffarten in Frage, d. h. sowohl die festen Teilchen mit einem mittleren Teilchendurchmesser von >1 µm, welche in der Zwischenschicht jedoch im wesentlichen keine Vakuolen erzeugen und/oder die Pigmente, deren mittlerer Teilchendurchmesser im allgemeinen 0,001 µm bis 1 µm beträgt. Wie vorstehend für die Basisschicht beschrieben können auch der Zwischenschicht grundsätzlich nur feste Teilchen oder nur Pigmente oder feste Teilchen und Pigmente in Kombination zugesetzt werden.

Übliche Füllstoffe der Zwischenschicht sind anorganische und/oder organische, mit Polypropylen unverträgliche Materialien wie z. B. Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Calciumcarbonat, Siliciumdioxid und Titandioxid bevorzugt eingesetzt werden. Als organische Füllstoffe kommen die üblicherweise verwendeten, mit dem Polymeren der Zwischenschicht unverträglichen Polymeren in Frage, insbesondere solche wie LDPE, LLDPE, HDPE, Polyester, Polystyrole, Polyamide, halogenierte organische Polymere, wobei Polyester wie beispielsweise Polybutylenterephthalate bevorzugt sind. "Unverträgliche Materialien bzw. unverträgliche Polymere" im Sinne der vorliegenden Erfindung bedeutet, daß das Material bzw. das Polymere in der Folie als separates Teilchen bzw. als separate Phase vorliegt.

Für bevorzugte Ausführungsformen, welche $TiO_2$ enthalten, wird das vorstehend für die Basisschicht beschriebene verwendet.

Die Füllstoffmenge der Zwischenschicht beträgt bis zu 30 Gew.-% und liegt im allgemeinen in einem Bereich von 1 bis 25 Gew.-%, vorzugsweise im Bereich von 3 bis 15 Gew.-%, ganz besonders bevorzugt im Bereich von 4 bis 12 Gew.-%, jeweils bezogen auf die Zwischenschicht.

Folien, welche nur mit Pigment in der Zwischenschicht ausgerüstet sind, enthalten dieses im allgemeinen in einer Menge von 2 bis 25 Gew.-%, insbesondere 3 bis 20 Gew.-%, bevorzugt 5 bis 15 Gew.-%, jeweils bezogen auf die Zwischenschicht. Als Pigmente sind Weißpigmente, insbesondere $TiO_2$ und $BaSO_4$, bevorzugt. $TiO_2$ hat bevorzugt einen mittleren Teilchendurchmesser von 0,01 bis 0,7 µm, insbesondere 0,1 bis 0,5 µm.

Folien, welche nur mit festen Teilchen in der Zwischenschicht ausgerüstet sind, enthalten diese im allgemeinen in einer Menge von 1 bis 25 Gew.-%, vorzugsweise von 1 bis 20 Gew.-%, jeweils bezogen auf die Zwischenschicht. Als feste Teilchen sind $CaCO_3$, $SiO_2$, Polyamide und Polybutylenterephthalate bevorzugt. Besonders vorteilhaft ist $CaCO_3$, insbesondere $CaCO_3$ einer mittleren Teilchengröße von 1 bis 5 µm.

Folien, welche mit festen Teilchen und mit Pigment in der Zwischenschicht ausgerüstet sind, enthalten feste Teilchen in einer Menge von 1 bis 20 Gew.-%, bevorzugt 1 bis 15 Gew.-%, ganz besonders bevorzugt 1 bis 12 Gew.-%, und Pigment in einer Menge von 1 bis 20 Gew.-%, bevorzugt 1 bis 15 Gew.-%, ganz besonders bevorzugt 1 bis 12 Gew.-%. Für solche Folientypen ist eine Kombination aus $CaCO_3$ als feste Teilchen und $TiO_2$ als Pigment bevorzugt.

Weiterhin kann die Zwischenschicht gegebenenfalls ein niedermolekulares Harz enthalten. Grundsätzlich werden gleiche Harze wie für die Basissschicht beschrieben verwendet, wobei die eingesetzten Mengen ebenfalls denen in der Basisschicht eingesetzten entsprechen.

Die opake, matte Mehrschichtfolie weist erfindungsgemäß eine Deckschicht auf, welche auf die vorstehend beschriebene Zwischenschicht aufgebracht ist.

Die Deckschicht enthält im wesentlichen

ein Propylenhomopolymer oder
ein Copolymer von

- Ethylen und Propylen oder
- Ethylen und Butylen oder
- Propylen und Butylen oder
- Ethylen und einem anderen α-Olefin mit 5 bis 10 Kohlenstoffatomen oder
- Propylen und einem anderen α-Olefin mit 5 bis 10 Kohlenstoffatomen oder

ein Terpolymer von

- Ethylen und Propylen und Butylen oder
- Ethylen und Propylen und einem anderen α-Olefin mit 5 bis 10 Kohlenstoffatomen oder

eine Mischung aus zwei oder mehreren der genannten Homo-, Co- und Terpolymeren oder
ein Blend aus zwei oder mehreren der genannten Homo-, Co- und Terpolymeren, gegebenenfalls gemischt mit einem oder mehreren der genannten Homo-, Co- und Terpolymeren.

Besonders bevorzugt enthält die Deckschicht im wesentlichen

ein Propylenhomopolymer oder
ein Copolymer von

- Ethylen und Propylen oder
- Ethylen und Butylen-1 oder

Propylen und Butylen-1 oder

ein Terpolymeren von

Ethylen und Propylen und Butylen-1 oder

eine Mischung aus zwei oder mehreren der genannten besonders bevorzugten Homo-, Co- und Terpolymeren oder
ein Blend aus zwei oder mehreren der genannten besonders bevorzugten Homo-, Co- und Terpolymeren, gegebenenfalls gemischt mit einem oder mehreren der genannten Homo-, Co- und Terpolymeren,

wobei insbesondere Propylenhomopolymer oder

statistische Ethylen-Propylen-Copolymere mit

einem Ethylengehalt von 2 bis 10 Gew.-%, bevorzugt 5 bis 8 Gew.-%, oder

statistische Propylen-Butylen-1-Copolymere mit

einem Butylengehalt von 4 bis 25 Gew.-%, bevorzugt 10 bis 20 Gew.-%,

jeweils bezogen auf das Gesamtgewicht des Copolymeren, oder
statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 3 bis 20 Gew.-%, bevorzugt 8 bis 10 Gew.-%,
jeweils bezogen auf das Gesamtgewicht des Terpolymeren, oder

ein Blend aus einem Ethylen-Propylen-Butylen-1-Terpolymeren und einem Propylen-Butylen-1-Copolymeren

mit einem Ethylengehalt von 0,1 bis 7 Gew.-%
und einem Propylengehalt von 50 bis 90 Gew.-%
und einem Butylen-1-Gehalt von 10 bis 40 Gew.-%,
jeweils bezogen auf das Gesamtgewicht des Polymerblends,

bevorzugt sind.

Das als oder in der Deckschicht eingesetzte Propylenhomopolymere enthält zum überwiegenden Teil (mindestens 90 %) Propylen und besitzt einen Schmelzpunkt von 140 °C oder höher, vorzugsweise 150 bis 170 °C, wobei isotaktisches Homopolypropylen mit einem n-heptanlöslichen Anteil von 6 Gew.-% und weniger, bezogen auf das isotaktische Homopolypropylen, bevorzugt ist. Das Homopolymere der Deckschicht bzw. das in dieser enthaltene Homopolymere hat im allgemeinen einen Schmelzflußindex von 0,5 g/10 min bis 15 g/10 min, vorzugsweise 1,5 g/10 min bis 6 g/10 min, bei 230 °C und einer Kraft von 21,6 N (DIN 53 735).

Die erfindungsgemäße Folie ist mindestens dreischichtig und umfaßt als wesentliche Schichten immer die Kernschicht K und zumindest eine Zwischenschicht Z und zumindest eine Deckschicht D gemäß einem Aufbau KZD. Die Wahl der Anzahl der Schichten hängt in erster Linie von dem vorgesehenen Einsatzzweck ab, wobei vier- und fünfschichtige Ausführungsformen besonders bevorzugt sind entsprechend einem Aufbau DZKZD oder einem asymmetrischen Aufbau DKZD.

Die Gesamtdicke der Folie kann innerhalb weiter Grenzen variieren und richtet sich nach dem beabsichtigten Verwendungszweck.

Die bevorzugten Ausführungsformen der erfindungsgemäßen Folie haben Gesamtdicken von 10 bis 120 µm, wobei 20 bis 100 µm, insbesondere 30 bis 100 µm, bevorzugt sind.

Die Dicke der Zwischenschicht/en beträgt jeweils unabhängig voneinander 2 bis 12 µm, wobei Zwischenschichtdicken von 3 bis 8 µm, insbesondere 3 bis 6 µm, bevorzugt sind. Die angegebenen Werte beziehen sich jeweils auf eine Zwischenschicht.

Die Dicke der Deckschicht/en ist größer als 0,4 µm und liegt vorzugsweise im Bereich von 0,8 bis 4 µm, insbesondere 1 bis 3 µm, wobei beidseitige Deckschichten gleich oder verschieden dick sein können.

Bevorzugte Ausführungsformen der Mehrschichtfolie sind vier- oder fünfschichtig. Aufbau, Dicke und Zusammensetzung einer zweiten Zwischen- bzw. Deckschicht können unabhängig von der bereits vorhandenen erfindungsgemäßen matten Zwischenschicht gewählt werden, wobei die zweite Zwischenschicht bevorzugt ebenfalls eine der vorstehend beschriebenen Mischungen enthält, welche aber nicht mit der der ersten Zwischenschicht identisch sein muß. Die zweite Deckschicht wird ebenfalls aus den vorstehend beschriebenen, aber unabhängig von der bereits vorhandenen ausgewählt.

Zur Verbesserung der Hafteigenschaften der Deckschicht/en ist mindestens eine Oberfläche der Folie corona- oder flammbehandelt, wobei gegebenenfalls die entsprechende Behandlung an beiden Oberflächen vorgenommen werden und gleich oder verschieden sein kann.

Es wurde gefunden, daß bei Einarbeitung der oben beschriebenen Polyethylene in eine Propylenhomopolymer-, Propylencopolymer- bzw. Propylenterpolymer-Zwischenschicht überraschenderweise eine sehr homogene Folienoptik mit der gewünschten matten Charakteristik erzielt werden konnte. Überraschenderweise bleibt das matte Aussehen der Folie trotz der aufgebrachten Deckschicht erhalten. Dieses Ergebnis ist besonders erstaunlich, weil die an sich bekannten herkömmlichen Deckschichten aus Propylenhomo-, Propylenco- und Propylenterpolymeren glänzend bis hochglänzend sind. Es wäre daher zu erwarten gewesen, daß das matte Erscheinungsbild der Folie durch die glänzende Deckschicht erheblich beeinträchtigt wird.

Um bestimmte Eigenschaften der erfindungsgemäßen Polyolefinfolie noch weiter zu verbessern, können sowohl die Basisschicht als auch die Deckschicht/en weitere Zusätze in einer jeweils wirksamen Menge enthalten, vorzugsweise Antiblockmittel und/oder Antistatika und/oder Gleitmittel und/oder Stabilisatoren und/oder Neutralisationsmittel. Alle Mengenangaben in der folgenden Ausführung in Gewichtsprozent (Gew.-%) beziehen sich jeweils auf die Schicht oder Schichten, der oder denen das Additiv zugesetzt sein kann.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanaminformaldehyd-Polymere, Siliciumdioxid und Calciumcarbonat. Die wirksame Menge an Antiblockmittel liegt im Bereich von 0,1 bis 2 Gew.-%, vorzugsweise 0,1 bis 0,5 Gew.-%. Die mittlere Teilchengröße liegt zwischen 1 und 6 $\mu$m, insbesondere 2 und 5 $\mu$m, wobei Teilchen mit einer kugelförmigen Gestalt, wie in der EP-A-0 236 945 und der DE-A-38 01 535 beschrieben, besonders geeignet sind. Bevorzugt werden die Antiblockmittel den Deckschichten zugesetzt.

Bevorzugte Antistatika sind Alkali-alkansulfonate, polyethermodifizierte, d. h. ethorylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit $\omega$-Hydroxy-($C_1$-$C_4$)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,5 Gew.-%. Des weiteren wird Glycerinmonostearat in einer Menge von 0,03 % bis 0,2 % bevorzugt als Antistatikum eingesetzt.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,1 bis 3 Gew.-%. Besonders geeignet ist der Zusatz von höheren aliphatischen Säureamiden im Bereich von 0,15 bis 0,25 Gew.-% in der Basisschicht und/oder den Deckschichten. Ein insbesondere geeignetes aliphatisches Säureamid ist Erucasäureamid.
Der Zusatz von Polydimethylsiloxanen ist im Bereich von 0,3 bis 2,0 Gew.-% bevorzugt, insbesondere Polydimethylsiloxane mit einer Viskosität von 10 000 bis 1 000 000 $mm^2/s$. Besonders günstig ist der Zusatz der Polydimethylsiloxane in eine oder beide Deckschichten.

Als Stabilisatoren können die üblichen stabilisierend wirkenden Verbindungen für Ethylen-, Propylen- und andere $\alpha$-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate.

Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Calciumstearat und/oder Calciumcarbonat und/oder synthetisches Dihydrotalcit (SHYT) einer mittleren Teilchengröße von höchstens 0,7 $\mu$m, einer absoluten Teilchengröße von kleiner 10 $\mu$m und einer spezifischen Oberfläche von mindestens 40 $m^2/g$.

Die Erfindung betrifft weiterhin ein Verfahren zur Herstellung der erfindungsgemäßen Mehrschichtfolie nach dem an sich bekannten Coextrusionsverfahren.
Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Coronabehandlung vorgesehenen Oberflächenschicht coronabehandelt wird.

Die biaxiale Streckung (Orientierung) wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst wird wie beim Coextrusionsverfahren üblich das Polymere bzw. die Polymermischung der einzelnen Schichten in einem Extruder komprimiert und verflüssigt, wobei die gegebenenfalls zugesetzten Additive und/oder Füllstoffe bereits im Polymer bzw. in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. In Längsrichtung wird vorzugsweise 4:1 bis 7:1 und in Querrichtung vorzugsweise 8:1 bis 11:1 gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

An die biaxiale Streckung der Folie schließt sich ihre Thermofixierung (Wärmebehandlung) an, wobei die Folie etwa 0,5 bis 10 s lang bei einer Temperatur von 140 bis 160 °C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie auch abgekühlt und verfestigt wird, durch einen Heiz- und Kühlkreislauf bei einer Temperatur von 20 bis 100 °C, vorzugsweise 40 bis 60 °C, zu halten.

Die Temperaturen, bei denen Längs- und Querstreckung durchgeführt werden, können in einem relativ großen Bereich variieren und richten sich nach der jeweiligen Zusammensetzung der einzelnen Schichten und nach den gewünschten Eigenschaften der Folie bzw. der Basisschicht wie z. B. Opazität, Weißgrad, Dicke, Dichte usw. Im allgemeinen wird die Längsstreckung vorzugsweise bei 120 bis 150 °C und die Querstreckung vorzugsweise bei 155 bis 190 °C durchgeführt.

Gegebenenfalls kann/können wie oben erwähnt nach der biaxialen Streckung eine oder beide Oberfläche/n der Folie nach einer der bekannten Methoden corona- oder flammbehandelt werden. Die Behandlungsintensität liegt im allgemeinen in einem Bereich von 37 bis 42 mN/m, vorzugsweise 38 bis 40 mN/m.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 5 bis 20 kV und 5 bis 30 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Für eine Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt zwischen 500 und 3 000 V, vorzugsweise liegt sie im Bereich von 1 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Die erfindungsgemäße Mehrschichtfolie zeichnet sich durch eine sehr homogene Folienoptik und ein charakteristisches mattes Aussehen in Verbindung mit sehr guten, gleichbleibenden Oberflächeneigenschaften aus.

Das matte Aussehen der Folie erzeugt ein papierähnliches Erscheinungsbild der Folie, welches im Verpakkungsbereich für bestimmte Anwendungen besonders wünschenswert ist. Überraschenderweise hat sich erwiesen, daß nicht alleine die Minimierung von Glanz den gewünschten optischen Effekt bringt, sondern daß vielmehr eine ausgewogene Optimierung der Eigenschaften erforderlich ist, welche durch die spezielle Zwischenschichtzusammensetzung gemäß Anspruch 1 überraschenderweise möglich ist.

Überraschenderweise bleibt das matte Aussehen der Folie trotz der äußeren, an sich glänzenden Deckschicht erhalten. Auf diese Weise ist es möglich, das matte Aussehen der erfindungsgemäßen HDPE-haltigen Schicht mit den vorteilhaften Oberflächeneigenschaften der herkömmlichen Deckschichten zu kombinieren. Die Folie weist eine sehr gute Maschinengängigkeit und gute Laufeigenschaften sowie gegebenenfalls gute Siegeleigenschaften auf. Die Folie ist sehr gut geeignet für eine Corona- oder Flammbehandlung und ausgezeichnet bedruckbar. Darüber hinaus ist die Folie aufgrund ihrer guten Hafteigenschaften zum Kaschieren und Laminieren sehr gut geeignet. Die Folie zeigt wenig Abrieb und gute Gleiteigenschaften.

Die Folienstruktur mit der konventionellen Deckschicht und der erfindungsgemässen Zwischenschicht bietet bezüglich ihrer Variationsmöglichkeiten besondere Vorteile. Da überraschenderweise die Folienoptik dominierend durch die Zwischenschicht bestimmt wird, kann der Folienhersteller jetzt dem Verarbeiter Folien mit ganz unterschiedlichem Aussehen zur Verfügung stellen, wobei jedoch die Oberflächencharakteristik der Folien erhalten bleibt. Das bedeutet für den Verarbeiter, daß er problemlos von einer Folie zur anderen wechseln kann, ohne seine Verarbeitungsbedingungen jedesmal umstellen zu müssen. Daraus resultieren wesentliche ökonomische Vorteile.

Zusammenfassend ist festzustellen, daß sich die erfindungsgemäße Mehrschichtfolie durch eine Vielzahl vorteilhafter Eigenschaften auszeichnet, insbesondere durch

- einen charakteristischen matten Glanz von kleiner 80 bei einem Meßwinkel von 85° (ASTM-D-523-78),
- eine besonders gleichmäßige matte Folienoptik,
- gute Oberflächeneigenschaften,
- eine gute Langzeitbeständigkeit der Oberflächenspannung und
- optische Variationsmöglichkeiten bei gleichbleibenden Oberflächeneigenschaften.

Durch diese überraschende Vielzahl ausgezeichneter Eigenschaften wird erfindungsgemäß eine Folie zur Verfügung gestellt, welche sich für verschiedenste Verwendungszwecke gleichermaßen hervorragend einsetzen läßt, insbesondere als werbewirksame Mattkaschierfolie oder als opake Verpackungsfolie auf schnellaufenden Verpackungsmaschinen oder als opake Zigaretteneinschlagfolie oder als opake Folie für den Etikettierprozeß wie z. B. In-mould-Labelling.

Darüber hinaus ist die Folie ausgezeichnet als Trägerfolie für Klebebänder (langzeitbeständige, hohe Oberflächenspannung) oder als Trägerfolie für wäßrige Barrierebeschichtungssysteme, z. B. auf Basis von wäßrigen Dispersionen von Polyvinylidenchlorid- oder Ethylenvinylalkohol-Copolymeren zu verwenden.

Sie läßt sich für verschiedene Zwecke mit wäßrigen Druckfarben bedrucken und weist dabei eine hervorragende Kurz- und Langzeitbedruckbarket auf. Aufgrund ihrer guten Sofort- und Langzeitbeschichtbarkeit eignet sich die Folie auch für die Herstellung von Kunststoffetiketten, insbesondere solchen, welche im In-Mould-Labelling-Prozeß verwendet werden. Des weiteren ist die Folie für die Herstellung von Laminaten mit Papier, Pappe, Metallen, metallisierten Kunststoffolien und Kunststoffolien geeignet.

Die Erfindung wird nun anhand von Ausführungsbeispielen noch näher erläutert.

**Beispiel 1**

Nach dem Coextrusionsverfahren wurde aus einer Breitschlitzdüse bei einer Extrusionstemperatur von 260 °C als Summe eine 1,4 mm dicke Vierschichtfolie mit einem Schichtaufbau ABCD extrudiert, d. h. auf einer Oberfläche der Basisschicht B war eine Zwischenschicht C und auf der anderen Oberfläche der Basisschicht B war eine Deckschicht A aufgebracht. Auf die Zwischenschicht C war eine von A verschiedene Deckschicht D aufgebracht. Die Deckschicht D wurde coronabehandelt.

Die wesentlichen Komponenten der Basisschicht waren:

| | |
|---|---|
| 92,6 Gew.-% | Propylenhomopolymerisat (PP) mit einem n-heptanlöslichen Anteil von 4,5 Gew.-% (bezogen auf 100 % PP) und einem Schmelzpunkt von 165 °C; der Schmelzflußindex des Propylenhomopolymeren liegt bei 3,2 g/10 min bei 230 °C und 21,6 N Belastung (DIN 53 735); |
| 4,2 Gew.-% | $CaCO_3$ des Typs ®Omyalithe 90T, Lieferant für Masterbatche Firma Multibase, Z.I. du Giers, F-38380 Saint-Laurent-du-Pont, Frankreich; |
| 3,2 Gew.-% | $TiO_2$ über Masterbatch ®P 8555 LM, Lieferant Firma Schulman GmbH, Hüttenstraße 211, D-5014 Kerpen 3 |

Die Zwischenschicht C bestand aus einer Mischung zweier Mischungskomponenten I und II. Die Komponente I war ein Terpolymer aus Ethylen-, Propylen- und Butylen-1-Einheiten mit einem Ethylengehalt von 1,9 Gew.-% und einem Butylen-1-Gehalt von 8,4 Gew.-%, bezogen auf das Terpolymer. Der Schmelzflußindex (21,6 N/230 °C) betrug 6,5 g/10 min. Die Komponente II war ein HDPE mit einem MFI (50 N/190 °C) von 11 g/10 min (gemessen nach DIN 53 735), einer Viskositätszahl von 160 $cm^3/g$ (gemessen nach DIN 53 728, Teil 4), einer Dichte von 0,954 $g/cm^3$ (gemessen nach DIN 53 479, Verfahren A), einem Kristallisationsgrad von 68 % und einem Schmelzpunkt von 132 °C nach DSC-Messung. Der Anteil beider Mischungskomponenten I und II in der Zusammensetzung der Zwischenschicht betrug je 50 Gew.-%.

Beide Komponenten wurden vor der Verarbeitung im Extruder im Verhältnis 1:1 2 min lang bei 500 Upm in einem Henschel-Mischer mechanisch gemischt, so daß eine homogene Granulatmischung resultierte.

Die Deckschicht D bestand aus einem Terpolymer aus Ethylen-, Propylen-und Butylen-1-Einheiten mit einem Ethylengehalt von 1,9 Gew.-% und einem Butylen-1-Gehalt von 8,4 Gew.-%, bezogen auf das Terpolymer. Der Schmelzflußindex (21,6 N/230 °C) betrug 6,5 g/10 min.

Die Deckschicht A bestand aus einem statistischen Ethylen-Propylen-Copolymeren mit einem Ethylengehalt von 5 Gew.-%, bezogen auf das Gewicht des Copolymeren. Der Schmelzpunkt des Copolymeren lag bei 134 °C, wobei der Schmelzflußindex (21,6 N/230 °C) 7,0 g/10 min betrug.

Alle Schichten enthielten zur Stabilisierung 0,12 Gew.-% Pentaerythrityl-Tetrakis-4-(3,5-ditertiärbutyl-4-hydroxyphenyl)-propionat (®Irganox 1010) sowie als Neutralisationsmittel 0,06 Gew.-% Calciumstearat. Die Basisschicht enthielt weiterhin 0,15 Gew.-% an N,N-bis(2-hydroxyethyl)-($C_{10}$-$C_{20}$)-alkylamin (®Armostat 300) als Antistatikum.

Die extrudierte Vierschichtfolie wurde über die entsprechenden Verfahrensschritte nach der Coextrusion über eine erste Abzugswalze und ein weiteres Walzentrio abgezogen und abgekühlt, anschließend längsgestreckt, quergestreckt, fixiert und coronabehandelt, wobei im einzelnen die folgenden Bedingungen gewählt wurden:

| | |
|---|---|
| Extrusion: | Extrusionstemperatur 260 °C |
| | Temperatur der ersten Abzugswalze 50 °C |
| | Temperatur des Walzentrios 50 °C |
| Längsstreckung: | Streckwalze T = 125 °C |
| | Längsstreckung um den Faktor 5 |
| Querstreckung: | Aufheizfelder T = 175 °C |
| | Streckfelder T = 165 °C |
| | Querstreckung um den Faktor 10 |
| Fixierung: | Temperatur T = 155 °C |
| Coronabehandlung: | Spannung: 10 000 V |
| | Frequenz: 10 000 Hz |

Die so hergestellte Mehrschichtfolie wies direkt nach der Herstellung eine Oberflächenspannung von 40 bis 41 mN/m auf (D-Seite). Die Folie war ca. 28 μm dick, wobei die Dicke der Deckschicht A und der Deckschicht D etwa 0,9 μm, die der Zwischenschicht C etwa 3,5 μm und die der Basisschicht 22,7 μm betrug.

**Beispiel 2**

Beispiel 1 wurde wiederholt. Nur die Zusammensetzung der Zwischenschicht C wurde wie folgt modifiziert:

70 Gew.-% des in Beispiel 1 in der Zwischenschicht C verwendeten Terpolymeren
30 Gew.-% des in Beispiel 1 in der Zwischenschicht C verwendeten HDPE

**Beispiel 3**

Beispiel 1 wurde wiederholt. Die Zusammensetzung der Zwischenschicht C wurde wie folgt modifiziert:

50 Gew.-% des in Beispiel 1 in der Deckschicht A verwendeten Copolymeren
50 Gew.-% des in Beispiel 1 in der Zwischenschicht C verwendeten HDPE

Die Zusammensetzung der Deckschicht D wurde wie folgt modifiziert: 100 Gew.-% des in Beispiel 1 in der Deckschicht A verwendeten Copolymeren.

**Beispiel 4**

Beispiel 3 wurde wiederholt. Nur die Zusammensetzung der Zwischenschicht C wurde wie folgt modifiziert:

30 Gew.-% des in Beispiel 1 in der Zwischenschicht C verwendeten HDPE
70 Gew.-% des in Beispiel 1 in der Deckschicht A verwendeten Copolymers

**Beispiel 5**

Beispiel 3 wurde wiederholt. Nur die Zusammensetzung der Zwischenschicht C wurde wie folgt modifiziert:

30 Gew.-% des in Beispiel 1 in der Zwischenschicht C verwendeten HDPE
70 Gew.-% des in Beispiel 1 in der Basisschicht B verwendeten Homopolymers

**Beispiel 6**

Beispiel 5 wurde wiederholt. Nur die Zusammensetzung der Deckschicht D wurde wie folgt modifiziert:

100 Gew.-% des in Beispiel 1 in der Basisschicht verwendeten Homopolymers

**Beispiel 7**

Beispiel 1 wurde wiederholt. Nur die Zusammensetzung der Zwischenschicht C wurde wie folgt modifiziert:

43,7 Gew.-% des in Beispiel 1 in der Zwischenschicht C verwendeten Terpolymers
43,7 Gew.-% des in Beispiel 1 in der Zwischenschicht C verwendeten HDPE
7,0 Gew.-% des in Beispiel 1 in der Basisschicht B verwendeten $TiO_2$
5,6 Gew.-% des in Beispiel 1 in der Basisschicht B verwendeten Polypropylens.

**Beispiel 8**

Beispiel 1 wurde wiederholt. Nur die Zusammensetzung der Zwischenschicht C wurde wie folgt modifiziert:

47,5 Gew.-% des in Beispiel 1 in der Zwischenschicht C verwendeten Terpolymers
47,5 Gew.-% des in Beispiel 1 in der Zwischenschicht C verwendeten HDPE
5,0 Gew.-% des in Beispiel 1 in der Basisschicht B verwendeten $CaCO_3$

**Beispiel 9**

Beispiel 1 wurde wiederholt. Nur die Zusammensetzung der Zwischenschicht C wurde wie folgt modifiziert:

46,3 Gew.-% des in Beispiel 1 in der Deckschicht D verwendeten Terpolymers
46,3 Gew.-% des in Beispiel 1 in der Zwischenschicht C verwendeten HDPE
4,2 Gew.-% des in Beispiel 1 in der Basisschicht B verwendeten $CaCO_3$
3,2 Gew.-% des in Beispiel 1 in der Basisschicht B verwendeten $TiO_2$

**Beispiel 10**

Beispiel 1 wurde wiederholt. Nur die Zusammensetzung der Basisschicht B wurde wie folgt modifiziert:

95 Gew.-% des in Beispiel 1 in der Basisschicht B verwendeten Homopolymers
5 Gew.-% des in Beispiel 1 in der Basisschicht B verwendeten $CaCO_3$

**Beispiel 11**

Beispiel 1 wurde wiederholt. Nur die Zusammensetzung der Basisschicht B wurde wie folgt modifiziert:

92 Gew.-% des in Beispiel 1 in der Basisschicht B verwendeten Homopolymers
8 Gew.-% des in Beispiel 1 in der Basisschicht B verwendeten $TiO_2$

**Vergleichsbeispiel 1**

Beispiel 7 wurde wiederholt, jedoch als Dreischichtfolie ohne Deckschicht D.

**Vergleichsbeispiel 2**

Beispiel 8 wurde wiederholt, jedoch als Dreischichtfolie ohne Deckschicht D.

**Vergleichsbeispiel 3**

Beispiel 1 wurde wiederholt, jedoch als Dreischichtfolie ohne Zwischenschicht C.
Zur Charakterisierung der Rohstoffe und der Folien wurden die folgenden Meßmethoden benutzt:

Schmelzflußindex

Der Schmelzflußindex wurde in Anlehnung an DIN 53 735 bei 21,6 N Belastung und 230 °C bzw. bei 50 N Belastung und 190 °C gemessen.

Schmelzpunkt

DSC-Messung, Maximum der Schmelzkurve, Aufheizgeschwindigkeit 20 °C/min.

Viskositätszahl J

Die Viskositätszahl ist ein Maß für die Molmasse. Die Viskositätszahl wird nach DIN 53 728, Teil 4, in 0,1%iger Dekahydronaphthalin-Lösung bei 135 °C gemessen.

Dichte $\sigma$

Die Dichte wird nach DIN 53 479, Verfahren A, bestimmt.

Kristallisationsgrad $\alpha$

Der Kristallisationsgrad läßt sich durch folgende Beziehung ermitteln:

$$\alpha = \frac{\sigma - \sigma_{amorph}}{\sigma_{kristallin} - \sigma_{amorph}} \cdot 100\ \%$$

mit

$\sigma_{amorph}$ = 0,8549 g/cm$^3$
$\sigma_{kristallin}$ = 1,0005 g/cm$^3$
$\sigma$ = Dichte des eingesetzten HDPE-Typs

Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° oder 85° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

Siegelnahtfestigkeit

Zur Bestimmung wurden zwei 15 mm breite Folienstreifen übereinandergelegt und bei 130 °C, einer Siegelzeit von 0,5 s und einem Siegeldruck von 10 N/cm$^2$ (Gerät: Brugger Typ NDS, einseitig beheizte Siegelbacke) versiegelt. Die Siegelnahtfestigkeit wurde nach der T-Peel-Methode bestimmt.

Rauhigkeit

Die Rauhigkeit wurde in Anlehnung an DIN 4768 bestimmt.

Reibung

Die Reibung wurde in Anlehnung an DIN 53 375 bestimmt.

Oberflächenspannung

Die Oberflächenspannung wurde mittels der sogenannten Tintenmethode (DIN 53 364) bestimmt.

Bedruckbarkeit

Die coronabehandelten Folien wurden 14 Tage nach ihrer Produktion (Kurzzeitbeurteilung) bzw. 6 Monate nach ihrer Produktion (Langzeitbeurteilung) bedruckt. Die Farbhaftung wurde mittels Klebebandtest beurteilt. Konnte mittels Klebeband wenig Farbe abgelöst werden, so wurde die Farbhaftung mit mäßig und bei deutlicher Farbablösung mit schlecht beurteilt.

Wasserdampfbarriere

Die Wasserdampfbarriere wird in Anlehnung an DIN 53 122 bei 23 °C und 85 % relativer Luftfeuchte gemessen und gibt die pro Quadratmeter und Tag durchgetretene Wassermenge in Gramm an.

Opazität und Weißgrad

Die Bestimmung der Opazität und des Weißgrades erfolgt mit Hilfe des elektrischen Remissionsphotometers "ELREPHO" der Firma Zeiss, Oberkochem (DE), Normlichtart C, 2° Normalbeobachter. Die Opazität wird nach DIN 53 146 bestimmt. Der Weißgrad wird als WG = RY + 3RZ - 3RX definiert.
WG = Weißgrad; RY, RZ, RX = entsprechende Reflexionsfaktoren bei Einsatz des Y-, Z- und X-Farbmeßfilters. Als Weißstandard wird ein Preßling aus Bariumsulfat (DIN 5033, Teil 9) verwendet. Eine ausführliche Beschreibung ist z. B. beschrieben in Hansl Loos, "Farbmessung", Verlag Beruf und Schule, Itzehoe, 1989.

Lichtdurchlässigkeit

Die Lichtdurchlässigkeit wird in Anlehnung an ASTM-D 1003-77 gemessen.

In den nachstehenden Tabellen 1 und 2 sind die Eigenschaften und der Aufbau der Polypropylen-Mehrschichtfolien der Beispiele und Vergleichsbeispiele zusammengefaßt.

## TABELLE 1

| Beispiel | Basisschicht B | Zwischenschicht C | Deckschicht A | Deckschicht D |
|---|---|---|---|---|
| B1 | 92,6 Gew.-% PP; 4,2 Gew.-% $CaCO_3$; 3,2 Gew.-% $TiO_2$ | 50 Gew.-% Terpolymer; 50 Gew.-% HDPE | 100 Gew.-% Copolymer | 100 Gew.-% Terpolymer |
| B2 | wie Beispiel 1 | 70 Gew.-% Terpolymer; 30 Gew.-% HDPE | 100 Gew.-% Copolymer | 100 Gew.-% Terpolymer |
| B3 | wie Beispiel 1 | 50 Gew.-% Copolymer; 50 Gew.-% HDPE | 100 Gew.-% Copolymer | 100 Gew.-% Copolymer |
| B4 | wie Beispiel 1 | 70 Gew.-% Copolymer; 30 Gew.-% HDPE | 100 Gew.-% Copolymer | 100 Gew.-% Copolymer |
| B5 | wie Beispiel 1 | 70 Gew.-% Homopolymer; 30 Gew.-% HDPE | 100 Gew.-% Copolymer | 100 Gew.-% Copolymer |
| B6 | wie Beispiel 1 | 70 Gew.-% Homopolymer; 30 Gew.-% HDPE | 100 Gew.-% Copolymer | 100 Gew.-% Homopolymer (nicht siegelbar) |
| B7 | wie Beispiel 1 | 43,7 Gew.-% Terpolymer; 43,7 Gew.-% HDPE; 7,0 Gew.-% $TiO_2$; 5,6 Gew.-% PP | 100 Gew.-% Copolymer | 100 Gew.-% Terpolymer |
| B8 | wie Beispiel 1 | 47,5 Gew.-% Terpolymer; 47,5 Gew.-% HDPE 5,0 Gew.-% $CaCO_3$ | 100 Gew.-% Copolymer | 100 Gew.-% Terpolymer |
| B9 | wie Beispiel 1 | 46,3 Gew.-% Terpolymer; 46,3 Gew.-% HDPE; 4,2 Gew.-% $CaCO_3$; 3,2 Gew.-% $TiO_2$ | 100 Gew.-.% Copolymer | 100 Gew.-% Terpolymer |
| B10 | 95 Gew.-% PP; 5 Gew.-% $CaCO_3$ | 50 Gew.-% Terpolymer; 50 Gew.-% HDPE | 100 Gew.-% Copolymer | 100 Gew.-% Terpolymer |
| B11 | 92 Gew.-% PP; 8 Gew.-% $TiO_2$ | 50 Gew.-% Terpolymer; 50 Gew.-% HDPE | 100 Gew.-% Copolymer | 100 Gew.-% Terpolymer |
| VB1 | wie Beispiel 1 | | 100 Gew.-% Copolymer | 43,7 Gew.-% Terpolymer; 43,7 Gew.-% HDPE; 7,0 Gew.-% $TiO_2$; 5,6 Gew.-% PP |
| VB2 | wie Beispiel 1 | | 100 Gew.-% Copolymer | 47,5 Gew.-% Terpolymer; 47,5 Gew.-% HDPE; 5,0 Gew.-% $CaCO_3$ |
| VB3 | wie Beispiel 1 | | 100 Gew.-% Copolymer | 100 Gew.-% Terpolymer |

B = Beispiel; VB = Vergleichsbeispiel

Ergebnis: VB1 "kreidet" an Walzen aus
VB2 "kreidet" an Walzen aus und saugt besonders viel Farbe auf!

## TABELLE 2

| Beispiel | Glanz 85°, D-Seite | Reibungs-koeffizient | visuelle Beurteilung (mattes Erscheinungs-bild) | Weißgrad D-Seite | Opazität D-Seite | Dichte | Druckbild |
|---|---|---|---|---|---|---|---|
| B1 | 45 | 0,6 | ++ | 74 | 69 | 0,78 | ++ |
| B2 | 47 | 0,5 | ++ | 74 | 69 | 0,78 | ++ |
| B3 | 50 | 0,5 | ++ | 75 | 70 | 0,78 | ++ |
| B4 | 52 | 0,5 | ++ | 74 | 69 | 0,77 | ++ |
| B5 | 53 | 0,6 | ++ | 74 | 69 | 0,78 | ++ |
| B6 | 55 | 0,5 | ++ | 74 | 69 | 0,78 | ++ |
| B7 | 40 | 0,4 | ++ | 77 | 70 | 0,80 | ++ |
| B8 | 38 | 0,5 | ++ | 76 | 70 | 0,78 | ++ |
| B9 | 40 | 0,5 | ++ | 79 | 73 | 0,79 | ++ |
| B10 | 45 | 0,5 | ++ | 65 | 67 | 0,69 | ++ |
| B11 | 45 | 0,6 | ++ | 81 | 64 | 0,94 | ++ |
| VB1 | 34 | 0,5 | ++ | 77 | 70 | 0,78 | - |
| VB2 | 29 | 0,5 | ++ | 75 | 70 | 0,78 | + |
| VB3 | 84 | 0,5 | -- | 77 | 70 | 0,78 | ++ |

B = Beispiel; VB = Vergleichsbeispiel

## Patentansprüche

1. Coextrudierte opake Polypropylen-Mehrschichtfolie, welche mindestens eine Basisschicht, enthaltend Polypropylen, oder eine Polypropylenmischung, und Füllstoffe, und mindestens eine Zwischenschicht sowie mindestens eine auf dieser Zwischenschicht aufgebrachte Deckschicht umfaßt, wobei die Deckschicht im wesentlichen

ein Propylenhomopolymeres oder
ein Copolymeres von

Ethylen und Propylen oder
Ethylen und Butylen oder
Propylen und Butylen oder
Ethylen und einem anderen α-Olefin mit 5 bis 10 Kohlenstoffatomen oder
Propylen und einem anderen α-Olefin mit 5 bis 10 Kohlenstoffatomen oder

ein Terpolymeres von

Ethylen und Propylen und Butylen oder
Ethylen und Propylen und einem anderen α-Olefin mit 5 bis 10 Kohlenstoffatomen oder

eine Mischung aus zwei oder mehreren der genannten Homo-, Co- und Terpolymeren oder
ein Blend aus zwei oder mehreren der genannten Homo-, Co- und Terpolymeren, gegebenenfalls gemischt mit einem oder mehreren der genannten Homo-, Co- und Terpolymeren,

enthält und die Zwischenschicht eine Mischung oder ein Blend zweier Komponenten I und II enthält, dadurch gekennzeichnet, daß die Komponente I im wesentlichen

ein Propylenhomopolymeres oder
ein Copolymeres von

Ethylen und Propylen oder
Ethylen und Butylen oder
Propylen und Butylen oder
Ethylen und einem anderen α-Olefin mit 5 bis 10 Kohlenstoffatomen oder
Propylen und einem anderen α-Olefin mit 5 bis 10 Kohlenstoffatomen oder

ein Terpolymeres von

Ethylen und Propylen und Butylen oder
Ethylen und Propylen und einem anderen α-Olefin mit 5 bis 10 Kohlenstoffatomen oder

eine Mischung aus zwei oder mehreren der genannten Homo-, Co- und Terpolymeren oder
ein Blend aus zwei oder mehreren der genannten Homo-, Co- und Terpolymeren, gegebenenfalls gemischt mit einem oder mehreren der genannten Homo-, Co- und Terpolymeren,

enthält und
die Komponente II im wesentlichen

ein HDPE oder
ein Blend zweier Blendkomponenten A und B enthält, wobei

die Blendkomponente A im wesentlichen

ein HDPE ist und

die Blendkomponente B im wesentlichen

ein Propylenhomopolymeres oder
ein Copolymeres von

Ethylen und Propylen oder
Ethylen und Butylen oder
Propylen und Butylen oder
Ethylen und einem anderen α-Olefin mit 5 bis 10 Kohlenstoffatomen oder

Propylen und einem anderen α-Olefin mit 5 bis 10 Kohlenstoffatomen oder

ein Terpolymeres von

Ethylen und Propylen und Butylen oder
Ethylen und Propylen und einem anderen α-Olefin mit 5 bis 10 Kohlenstoffatomen oder

eine Mischung aus zwei oder mehreren der genannten Homo-, Co- und Terpolymeren oder
ein Blend aus zwei oder mehreren der genannten Homo-, Co- und Terpolymeren

ist

und die Folie matt ist.

**2.** Polypropylen-Mehrschichtfolie nach Anspruch 1, dadurch gekennzeichnet, daß die Komponente I im wesentlichen

ein Propylenhomopolymeres ist oder
ein Copolymeres von

Ethylen und Propylen oder
Ethylen und Butylen-1 oder
Propylen und Butylen-1 oder

ein Terpolymeres von

Ethylen und Propylen und Butylen-1 oder

eine Mischung aus zwei oder mehreren der genannten besonders bevorzugten Homo-, Co- Terpolymeren oder
ein Blend aus zwei oder mehreren der genannten besonders bevorzugten Homo-, Co- und Terpolymeren, gegebenenfalls gemischt mit einem oder mehreren der genannten Homo-, Co- und Terpolymeren,
wobei insbesondere Propylenhomopolymer oder

statistische Ethylen-Propylen-Copolymere mit

einem Ethylengehalt von 2 bis 10 Gew.-%, bevorzugt 5 bis 8 Gew.-%, oder

statistische Propylen-Butylen-1-Copolymere mit

einem Butylengehalt von 4 bis 25 Gew.-%, bevorzugt 10 bis 20 Gew.-%,

jeweils bezogen auf das Gesamtgewicht des Copolymeren, oder
statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 3 bis 20 Gew.-%, bevorzugt 8 bis 10 Gew.-%,
jeweils bezogen auf das Gesamtgewicht des Terpolymeren, oder

ein Blend aus einem Ethylen-Propylen-Butylen-1-Terpolymeren und
einem Propylen-Butylen-1-Copolymeren

mit einem Ethylengehalt von 0,1 bis 7 Gew.-%
und einem Propylengehalt von 50 bis 90 Gew.-%
und einem Butylen-1-Gehalt von 10 bis 40 Gew.-%,
jeweils bezogen auf das Gesamtgewicht des Polymerblends,

bevorzugt sind, und

die Blendkomponente B im wesentlichen

ein Propylenhomopolymeres ist oder
ein Copolymeres von

Ethylen und Propylen oder
Ethylen und Butylen-1 oder
Propylen und Butylen-1 oder

ein Terpolymeres von

Ethylen und Propylen und Butylen-1 oder

eine Mischung aus zwei oder mehreren der genannten besonders bevorzugten Homo-, Co- und Terpolymeren oder
ein Blend aus zwei oder mehreren der genannten besonders bevorzugten Homo-, Co- und Terpolymeren, wobei insbesondere Propylenhomopolymer oder

statistische Ethylen-Propylen-Copolymere mit

einem Ethylengehalt von 2 bis 10 Gew.-%, bevorzugt 5 bis 8 Gew.-%, oder

statistische Propylen-Butylen-1-Copolymere mit

einem Butylengehalt von 4 bis 25 Gew.-%, bevorzugt 10 bis 20 Gew.-%,

jeweils bezogen auf das Gesamtgewicht des Copolymeren, oder
statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 3 bis 20 Gew.-%, bevorzugt 8 bis 10 Gew.-%,
jeweils bezogen auf das Gesamtgewicht des Terpolymeren, oder

ein Blend aus einem Ethylen-Propylen-Butylen-1-Terpolymeren und
einem Propylen-Butylen-1-Copolymeren

mit einem Ethylengehalt von 0,1 bis 7 Gew.-%
und einem Propylengehalt von 50 bis 90 Gew.-%
und einem Butylen-1-Gehalt von 10 bis 40 Gew.-%,
jeweils bezogen auf das Gesamtgewicht des Polymerblends,

bevorzugt sind.

**3.** Polypropylen-Mehrschichtfolie nach Anspruch 1 und/oder 2, dadurch gekennzeichnet, daß das HDPE einen MFI (50 N/190 °C) von größer 1 bis 50 g/10 min (gemessen nach DIN 53 735), eine Viskositätszahl von 100 bis 450 $cm^3/g$ (gemessen nach DIN 53 728, Teil 4), eine Dichte von 0,93 bis 0,97 $g/cm^3$ (gemessen nach DIN 53 479, Verfahren A), einen Kristallisationsgrad von 35 bis 80 % und einen Schmelzpunkt von 120 bis 150 °C nach DSC-Messung aufweist.

**4.** Polypropylen-Mehrschichtfolie nach einem oder mehreren der Ansprüche 1 bis 3, dadurch gekennzeichnet, daß das Verhältnis der Blendkomponenten A und B im Bereich von A:B = 20:80 bis A:B = 80:20, vorzugsweise zwischen A:B = 40:60 und A:B = 60:40, liegt.

**5.** Polypropylen-Mehrschichtfolie nach einem oder mehreren der Ansprüche 1 bis 4, dadurch gekennzeichnet, daß das Blend aus den Komponenten A und B einen Schmelzflußindex von 1,5 bis 12 9/10 min, vorzugsweise 2,5 bis 6 g/10 min, (230 °C, 21,6 N Belastung) hat.

**6.** Polypropylen-Mehrschichtfolie nach einem oder mehreren der Ansprüche 1 bis 5, dadurch gekennzeichnet, daß das Verhältnis der Komponenten I und II im Bereich von I:II = 90:10 bis I:II = 10:90 liegt.

7. Polypropylen-Mehrschichtfolie nach einem oder mehreren der Ansprüche 1 bis 6, dadurch gekennzeichnet, daß das Propylenpolymere der Basisschicht einen Schmelzpunkt von mindestens 140 °C besitzt und der Schmelzflußindex im Bereich von 0,5 bis 15 g/10 min liegt.

8. Polypropylen-Mehrschichtfolie nach einem oder mehreren der Ansprüche 1 bis 7, dadurch gekennzeichnet, daß die Basisschicht als Füllstoffe vakuoleniniziierende feste Teilchen, vorzugsweise $CaCO_3$ oder unverträgliche Polymere, und/oder Pigmente, vorzugsweise $TiO_2$, enthält.

9. Polypropylen-Mehrschichtfolie nach Anspruch 8, dadurch gekennzeichnet, daß die festen Teilchen einen mittleren Teilchendurchmesser von $\geq 1$ µm und die Pigmente einen mittleren Teilchendurchmesser von <1 µm aufweisen.

10. Polypropylen-Mehrschichtfolie nach einem oder mehreren der Ansprüche 1 bis 9, dadurch gekennzeichnet, daß die Basisschicht als Füllstoffe nur Pigmente, vorzugsweise $TiO_2$, in einer Menge von 2 bis 25 Gew.-% enthält und die Dichte der Folie $\geq 0,9$ g/cm$^3$ beträgt.

11. Polypropylen-Mehrschichtfolie nach einem oder mehreren der Ansprüche 1 bis 9, dadurch gekennzeichnet, daß die Basisschicht als Füllstoffe nur feste Teilchen, vorzugsweise $CaCO_3$, in einer Menge von 1 bis 25 Gew.-% enthält und die Dichte der Folie 0,4 bis 0,85 g/cm$^3$ beträgt.

12. Polypropylen-Mehrschichtfolie nach Anspruch 11, dadurch gekennzeichnet, daß die festen Teilchen in der Basisschicht in einer Menge von 2 bis 5 Gew.-% enthalten sind und die Dichte der Folie 0,7 bis 0,85 g/cm$^3$ beträgt.

13. Polypropylen-Mehrschichtfolie nach Anspruch 11, dadurch gekennzeichnet, daß in der Basisschicht die festen Teilchen in einer Menge von 9 bis 14 Gew.-% enthalten sind und die Dichte der Folie 0,4 bis 0,7 g/cm$^3$ beträgt.

14. Polypropylen-Mehrschichtfolie nach einem oder mehreren der Ansprüche 1 bis 9, dadurch gekennzeichnet, daß die Basisschicht als Füllstoffe feste Teilchen, vorzugsweise $CaCO_3$, in einer Menge von 1 bis 10 Gew.-% und Pigmente, vorzugsweise $TiO_2$, in einer Menge von 1 bis 7 Gew.-% enthält und die Dichte der Folie 0,6 bis 0,85 g/cm$^3$ beträgt.

15. Polypropylen-Mehrschichtfolie nach einem oder mehreren der Ansprüche 1 bis 14, dadurch gekennzeichnet, daß die Zwischenschicht als Füllstoffe feste Teilchen und/oder Pigmente enthält.

16. Polypropylen-Mehrschichtfolie nach einem oder mehreren der Ansprüche 1 bis 14, dadurch gekennzeichnet, daß die Zwischenschicht nur feste Teilchen, vorzugsweise $CaCO_3$ oder $SiO_2$, in einer Menge von 1 bis 25 Gew.-% enthält und im wesentlichen vakuolenfrei ist.

17. Polypropylen-Mehrschichtfolie nach einem oder mehreren der Ansprüche 1 bis 14, dadurch gekennzeichnet, daß die Zwischenschicht nur Pigmente, vorzugsweise $TiO_2$, in einer Menge von 2 bis 25 Gew.-% enthält.

18. Polypropylen-Mehrschichtfolie nach einem oder mehreren der Ansprüche 1 bis 14, dadurch gekennzeichnet, daß die Zwischenschicht feste Teilchen, vorzugsweise $CaCO_3$ oder $SiO_2$, in einer Menge von 1 bis 20 Gew.-% und Pigmente, vorzugsweise $TiO_2$, in einer Menge von 1 bis 20 Gew.-% enthält.

19. Polypropylen-Mehrschichtfolie nach einem oder mehreren der Ansprüche 1 bis 18, dadurch gekennzeichnet, daß die Deckschicht im wesentlichen

ein Propylenhomopolymeres oder
ein Copolymeres von

Ethylen und Propylen oder
Ethylen und Butylen-1 oder
Propylen und Butylen-1 oder

ein Terpolymeres von

Ethylen und Propylen und Butylen-1 oder

eine Mischung aus zwei oder mehreren der genannten besonders bevorzugten Homo-, Co- Terpolymeren oder
ein Blend aus zwei oder mehreren der genannten besonders bevorzugten Homo-, Co- und Terpolymeren, gegebenenfalls gemischt mit einem oder mehreren der genannten Homo-, Co- und Terpolymeren, enthält, wobei insbesondere Propylenhomopolymer oder

statistische Ethylen-Propylen-Copolymere mit

einem Ethylengehalt von 2 bis 10 Gew.-%, bevorzugt 5 bis 8 Gew.-%, oder

statistische Propylen-Butylen-1-Copolymere mit

einem Butylengehalt von 4 bis 25 Gew.-%, bevorzugt 10 bis 20 Gew.-%,

jeweils bezogen auf das Gesamtgewicht des Copolymeren, oder
statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 3 bis 20 Gew.-%, bevorzugt 8 bis 10 Gew.-%,
jeweils bezogen auf das Gesamtgewicht des Terpolymeren, oder

ein Blend aus einem Ethylen-Propylen-Butylen-1-Terpolymeren und
einem Propylen-Butylen-1-Copolymeren

mit einem Ethylengehalt von 0,1 bis 7 Gew.-%
und einem Propylengehalt von 50 bis 90 Gew.-%
und einem Butylen-1-Gehalt von 10 bis 40 Gew.-%,
jeweils bezogen auf das Gesamtgewicht des Polymerblends,

bevorzugt sind.

**20.** Polypropylen-Mehrschichtfolie nach einem oder mehreren der Ansprüche 1 bis 19, dadurch gekennzeichnet, daß die Deckschicht und/oder die Basisschicht als Additive Antiblockmittel und/oder Antistatika und/oder Gleitmittel und/oder Stabilisatoren und/oder Neutralisationsmittel enthält/enthalten.

**21.** Polypropylen-Mehrschichtfolie nach Anspruch 1, dadurch gekennzeichnet, daß sie bei einem Meßwinkel von 85° einen Glanz von kleiner 80, vorzugsweise 25 bis 65, auf der/den beiden matten Seite/n aufweist, gemessen nach ASTM-D 523-78.

**22.** Verfahren zur Herstellung der Polypropylen-Mehrschichtfolie nach Anspruch 1, bei dem die den einzelnen Schichten der Folie entsprechenden Schmelzen durch eine Flachdüse coextrudiert werden, die coextrudierte Folie über eine Abzugswalze, deren Temperatur zwischen 20 und 100 °C liegt, abgezogen wird, die Folie biaxial gestreckt wird mit einem Längsstreckverhältnis von 4:1 bis 7:1 und einem Querstreckverhältnis von 8:1 bis 11:1, die biaxial gestreckte Folie thermofixiert, gegebenenfalls coronabehandelt und anschließend aufgewickelt wird, dadurch gekennzeichnet, daß die Längsstreckung der Folie bei 120 bis 150 °C und die Querstreckung bei 155 bis 190 °C durchgeführt wird und daß die Folie mindestens eine matte Oberfläche aufweist.

**23.** Verwendung der Polypropylen-Mehrschichtfolie nach einem oder mehreren der Ansprüche 1 bis 21 als Verpackungsfolie, vorzugsweise bedruckte Verpackungsfolie, als Trägerfolie für eine gegebenenfalls partielle Klebeschicht, als Trägerfolie für wäßrige Barrierebeschichtungssysteme, zur Herstellung von Laminaten, zur Herstellung von Laminaten mit Papier, Pappe, Metallen, metallisierten Kunststoffolien oder Kunststoffolien, als Papierersatz, im In-mould-Label-ling-Prozeß, als Barrierefolie oder als Zigaretteneinstoffverpackung.

**24.** Laminate, enthaltend eine Polypropylen-Mehrschichtfolie nach einem oder mehreren der Ansprüche 1 bis 21.

**25.** Verpackungen, enthaltend eine Polypropylen-Mehrschichtfolie nach einem oder mehreren der Ansprüche 1 bis 21.

26. Beschichtete Barrieresysteme, enthaltend eine Polypropylen-Mehrschichtfolie nach einem oder mehreren der Ansprüche 1 bis 21.

27. Etikett, umfassend eine Polypropylen-Mehrschichtfolie nach einem oder mehreren der Ansprüche 1 bis 21.

## Claims

1. A coextruded opaque polypropylene multi-layer film comprising at least one base layer containing polypropylene or a polypropylene mixture, and fillers and at least one intermediate layer as well as at least one outer layer applied to this intermediate layer, the outer layer containing substantially

   one propylene homopolymer or
   a copolymer of ethylene and propylene or

      ethylene and butylene or
      propylene and butylene or
      ethylene and another α-olefin with 5 to 10 carbon atoms or
      propylene and another α-olefin with 5 to 10 carbon atoms or

   a terpolymer of

      ethylene and propylene and butylene or
      ethylene and propylene and another α-olefin with 5 to 10 carbon atoms or

   a mixture of two or more of the said homo-, co- and terpolymers or
   a blend of two or more of the said homo-, co- and terpolymers possibly mixed with one or more of the said homo-, co- and terpolymers,

   and in that the intermediate layer contains a mixture or a blend of two components I and II, characterised in that the component I substantially contains

   a propylene homopolymer or
   a copolymer of

      ethylene and propylene or
      ethylene and butylene or
      propylene and butylene or
      ethylene and another α-olefin with 5 to 10 carbon atoms or
      propylene and another α-olefin with 5 to 10 carbon atoms or

   a terpolymer of

      ethylene and propylene and butylene or
      ethylene and propylene and another α-olefine with 5 to 10 carbon atoms or

   a mixture of two or more of the said homo-, co- and terpolymers or
   a blend of two or more of the said homo-, co- and terpolymers, possibly mixed

   with one or more of the said homo-, co- and terpolymers,
   and in that
   the component II contains substantially

   an HDPE or
   a blend of two blend components A and B, whereby

      the blend component A is substantially

an HDPE and

the blend component B is substantially

a propylene homopolymer or
a copolymer of

ethylene and propylene or
ethylene and butylene or
propylene and butylene or
ethylene and another α-olefin with 5 to 10 carbon atoms or
propylene and another α-olefin with 5 to 10 carbon atoms or

a terpolymer of

ethylene and propylene and butylene or
ethylene and propylene and another α-olefin with 5 to 10 carbon atoms or

a mixture of two or more of the said homo-, co- and terpolymers or
a blend of two or more of the said homo-, co- and terpolymers

and the film is matt.

**2.** A multi-layer polypropylene film according to claim 1, characterised in that the component 1 is substantially

a propylene homopolymer or
contains a copolymer of

ethylene and propylene or
ethylene and butylene-1 or
propylene and butylene-1 or

a terpolymer of

ethylene and propylene and butylene-1 or
a mixture of two or more of the said particularly preferred homo-, co- and terpolymers or

a blend of two or more of the said particularly preferred homo-, co- and terpolymers, possibly blended with one or more of the said homo-, co- and terpolymers, whereby in particular propylene homopolymer or

statistical ethylene propylene copolymers with

an ethylene content of 2 to 10% by weight and preferably 5 to 8% by weight or

statistical propylene butylene-1 copolymers with

a butylene content of 4 to 25% by weight and preferably 10 to 20% by weight,

respectively referred to the total weight of the copolymer, or
statistical ethylene propylene-1 copolymers with

an ethylene content of 1 to 10% by weight and preferably 2 to 6% by weight and
a butylene-1 content of 3 to 20% by weight and preferably 8 to 10% by weight
respectively related to the total weight of copolymer or

a blend of an ethylene propylene butylene-1 terpolymer and
a propylene butylene-1 copolymer

with an ethylene content of 0.1 to 7% by weight
and a propylene content of 50 to 90% by weight
and a butylene-1 content of 10 to 40% by weight
respectively related to the total weight of the polymer blend are preferred, and in that

the blend component B is substantially

a propylene homopolymer or
a copolymer of

ethylene and propylene or
ethylene and butylene-1 or
propylene and butylene-1 or

a terpolymer of

ethylene and propylene and butylene-1 or

a mixture of two or more of the said particularly preferred homo-, co- and terpolymers or
a blend of two or more of the said particularly preferred homo-, co- and terpolymers,
whereby in particular propylene homopolymer or

statistical ethylene propylene copolymers with

an ethylene content of 2 to 10% by weight and preferably 5 to 8% by weight or

statistical propylene butylene-1 copolymers with

a butylene content of 4 to 25% by weight and preferably 10 to 20% by weight

respectively related to the total weight of copolymer or
statistical ethylene propylene butylene-1 terpolymer with

an ethylene content of 1 to 10% by weight and preferably 2 to 6% by weight and
a butylene-1 content of 3 to 20% by weight and preferably 8 to 10% by weight
respectively referred to the total weight of the terpolymer, or

a blend of an ethylene propylene butylene-1 terpolymer and
a propylene butylene-1 copolymer

with an ethylene content of 0.1 to 7% by weight
and a propylene content of 50 to 90% by weight
and a butylene-1 content of 10 to 40% by weight
respectively referred to the total weight of the polymer blend.

**3.** A polypropylene multi-layer film according to claim 1 and/or 2, characterised in that the HDPE has MFI (50 N/190°C) greater than 1 to 50 g/10 min (measured to DIN 53 735, a viscosity number of 100 to 450 cu.cm/g (measured according to DIN 53 728, part 4), a density of 0.93 to 0.97 g/cu.cm (measured to DIN 53 479, method A), a crystallisation degree of 35 to 80% and a melting point of 120 to 150°C according to DSC measurement.

**4.** A polypropylene multi-layer film according to one or more of claims 1 to 3, characterised in that the ratio of blend components A and B lies in the range from A:B = 20:80 to A:B = 80:20 and is preferably between A:B = 40:60 and A:B = 60:40.

**5.** A polypropylene multi-layer film according to one or more of claims 1 to 4, characterised in that the blend of components A and B has a melt flow index of 1.5 to 12 g/10 min, preferably 2.5 to 6 g/10 min (230°C, 21.6 N loading).

**6.** A polypropylene multi-layer film according to one or more of claims 1 to 5, characterised in that the ratio of components I and II is in the range from I:II = 90:10 to I:II = 10:90.

7. A polypropylene multi-layer film according to one or more of claims 1 to 6, characterised in that the propylene polymer of the base layer has a melting point of at least 140°C while the melt flow index is in the range from 0.5 to 15 g/10 min.

8. A polypropylene multi-layer film according to one or more of claims 1 to 7, characterised in that the base layer contains as fillers vacuole-initiated solid particles, preferably $CaCO_3$ or incompatible polymers and/or pigments, preferably $TiO_2$.

9. A polypropylene multi-layer film according to claim 8, characterised in that the solid particles have a mean particle diameter of $\geq 1 \mu m$ and the pigments have a mean particle diameter of $< 1 \mu m$.

10. A polypropylene multi-layer film according to one or more of claims 1 to 9, characterised in that the base layer preferably has as fillers only pigments, preferably $TiO_2$, in a quantity of 2 to 25% by weight, the density of the film amounting to ≥ 0.9 g/cu.cm.

11. A polypropylene multi-layer film according to one or more of claims 1 to 9, characterised in that the base layer has as fillers only solid particles, preferably $CaCO_3$, in a quantity of 1 to 25% by weight, the density of the film amounting to 0.4 to 0.85 g/cu.cm.

12. A polypropylene multi-layer film according to claim 11, characterised in that the solid particles in the base layer are contained in a quantity of 2 to 5% by weight, the density of the film amounting to 0.7 to 0.85 g/cu.cm.

13. A polypropylene multi-layer film according to claim 11, characterised in that in the base layer the solid particles are present in a quantity of 9 to 14% by weight, the density of the film amounting to 0.4 to 0.7 g/cu.cm.

14. A polypropylene multi-layer film according to one or more of claims 1 to 9, characterised in that the base layer contains as fillers solid particles, preferably $CaCO_3$, in a quantity of 1 to 10% by weight and pigments, preferably $TiO_2$, in a quantity of 1 to 7% by weight, the density of the film being 0.6 to 0.85 g/cu.cm.

15. A polypropylene multi-layer film according to one or more of claims 1 to 14, characterised in that the intermediate layer contains solid particles and/or pigments as fillers.

16. A polypropylene multi-layer film according to one or more of claims 1 to 14, characterised in that the intermediate layer contains only solid particles, preferably $CaCO_3$ or $SiO_2$, in a quantity of 1 to 25% by weight and is substantially vacuole free.

17. A polypropylene multi-layer film according to one or more of claims 1 to 14, characterised in that the intermediate layer contains only pigments, preferably $TiO_2$, in a quantity of 2 to 25% by weight.

18. A polypropylene multi-layer film according to one or more of claims 1 to 14, characterised in that the intermediate layer contains solid particles, preferably $CaCO_3$ or $SiO_2$, in a quantity of 1 to 20% by weight and pigments, preferably $TiO_2$, in a quantity of 1 to 20% by weight.

19. A polypropylene multi-layer film according to one or more of claims 1 to 18, characterised in that the outer layer contains substantially

    a propylene homopolymer or
    a copolymer of

        ethylene and propylene or
        ethylene and butylene-1 or
        propylene and butylene-1 or

    a terpolymer of

        ethylene and propylene and butylene-1 or

a mixture of two or more of the said particularly preferred homo-, co- terpolymers or

a blend of two or more of the said particularly preferred homo, co- and terpolymers, possibly mixed with one or more of the said homo-, co- and terpolymers whereby in particular propylene homopolymer or

statistical ethylene propylene copolymers with

an ethylene content of 2 to 10% by weight and preferably 5 to 8% by weight or

statistical propylene butylene-1 copolymers with

a butylene content of 4 to 25% by weight and preferably 10 to 20% by weight

respectively referred to the total weight of the copolymer or
statistical ethylene propylene butylene-1 terpolymers with

an ethylene content of 1 to 10% by weight, preferably 2 to 6% by weight, and
a butylene-1 content of 3 to 20% by weight and preferably 8 to 10% by weight
respectively referred to the total weight of the terpolymer, or

a blend of an ethylene propylene butylene-1 terpolymer and
a propylene butylene-1 copolymer

with an ethylene content of 0.1 to 7% by weight
and a propylene content of 50 to 90% by weight
and a butylene-1 content of 10 to 40% by weight
respectively referred to the total weight of the polymer blend

are preferred.

**20.** A polypropylene multi-layer film according to one or more of claims 1 to 19, characterised in that the outer layer and/or the base layer contain(s) as additives anti-blocking agents and/or anti-static agents and/or lubricants and/or stabilisers and/or neutralising agents.

**21.** A polypropylene multi-layer film according to claim 1, characterised in that for a measuring angle of 85°, it has a gloss of less than 80 and preferably 25 to 65 on the one or two matt sides, measured according to ASTM-D 523-78.

**22.** A method of producing the polypropylene multi-layer film according to claim 1, in which the molten masses corresponding to the individual layers of the film are coextruded through a flat nozzle, the coextruded film is drawn off over a pull-off roll, the temperature of which is between 20 and 100°C, the film is biaxially stretched with a longitudinal stretching ratio of 4:1 to 7:1 and a transverse stretching ratio of 8:1 to 11:1, the biaxially stretched film being then heat set, possibly corona treated and then wound up, characterised in that the longitudinal stretching of the film is carried out at 120 to 150°C while the transverse stretching is carried out at 155 to 190°C and in that the film has at least one mail surface.

**23.** Use of the polypropylene multi-layer film according to one or more of claims 1 to 21 as packaging film, preferably printed packaging film, as a carrier film for a possibly partial adhesive layer, as a carrier layer for aqueous barrier coating systems, for producing laminates, for producing laminates with paper, cardboard, metals, metallised synthetic plastics films or synthetic plastics films, as a paper substitute, in in-mould labelling process, as barrier film or as cigarette material packaging.

**24.** Laminates containing a polypropylene multi-layer film according to one or more of claims 1 to 21,

**25.** Packagings containing a polypropylene multi-layer film according to one or more of claims 1 to 21.

**26.** Coated barrier systems containing a polypropylene multi-layer film according to one or more of claims 1 to 21.

**27.** Label comprising a polypropylene multi-layer film according to one or more of claims 1 to 21.

## Revendications

1. Feuille multicouche en polypropylène opaque coextrudée qui comprend au moins une couche de base contenant du polypropylène ou un mélange de polypropylène, et des matières de charge, et au moins une couche intermédiaire, ainsi qu'au moins une couche de recouvrement appliquée sur cette couche intermédiaire, dans laquelle la couche de recouvrement contient essentiellement

   un homopolymère de propylène ou
   un copolymère

      d'éthylène et de propylène ou
      d'éthylène et de butylène ou
      de propylène et de butylène ou
      d'éthylène et d'une autre $\alpha$-oléfine contenant de 5 à 10 atomes de carbone ou
      de propylène et d'une autre $\alpha$-oléfine contenant de 5 à 10 atomes de carbone ou

   un terpolymère

      d'éthylène et de propylène et de butylène ou
      d'éthylène et de propylène et d'une autre $\alpha$-oléfine contenant de 5 à 10 atomes de carbone ou

   un mélange de deux des homopolymères, des copolymères et des terpolymères mentionnés ou plus, ou
   un mélange homogène de deux des homopolymères, des copolymères et des terpolymères mentionnés ou plus le cas échéant en mélange avec un ou plusieurs des homopolymères, des copolymères et des terpolymères mentionnés,

   et la couche intermédiaire contient un mélange ou un mélange homogène de deux composants I et II, caractérisée en ce que le composant I contient essentiellement

   un homopolymère de propylène ou
   un copolymère

      d'éthylène et de propylène ou
      d'éthylène et de butylène ou
      de propylène et de butylène ou
      d'éthylène et d'une autre $\alpha$-oléfine contenant de 5 à 10 atomes de carbone ou
      de propylène et d'une autre $\alpha$-oléfine contenant de 5 à 10 atomes de carbone ou

   un terpolymère

      d'éthylène et de propylène et de butylène ou
      d'éthylène et de propylène et d'une autre $\alpha$-oléfine contenant de 5 à 10 atomes de carbone ou

   un mélange de deux des homopolymères, des copolymères et des terpolymères mentionnés ou plus, ou
   un mélange homogène de deux des homopolymères, des copolymères et des terpolymères mentionnés ou plus le cas échéant en mélange avec un ou plusieurs des homopolymères, des copolymères et des terpolymères mentionnés,

   et le composant II représente essentiellement

   un HDPE ou
   un mélange homogène de deux composants A et B de mélange, dans lequel

      le composant A du mélange homogène représente essentiellement

         un HDPE et

      le composant B du mélange homogène représente essentiellement

un homopolymère de propylène ou

un copolymère
d'éthylène et de propylène ou
d'éthylène et de butylène ou
de propylène et de butylène ou
d'éthylène et d'une autre $\alpha$-oléfine contenant de 5 à 10 atomes de carbone ou
de propylène et d'une autre $\alpha$-oléfine contenant de 5 à 10 atomes de carbone ou

un terpolymère

d'éthylène et de propylène et de butylène ou
d'éthylène et de propylène et d'une autre $\alpha$-oléfine contenant de 5 à 10 atomes de carbone ou

un mélange de deux des homopolymères, des copolymères et des terpolymères mentionnés ou plus, ou
un mélange homogène de deux des homopolymères, des copolymères et des terpolymères mentionnés ou plus,

et la feuille est mate.

**2.** Feuille multicouche en polypropylène selon la revendication 1, caractérisée en ce que le composant I représente essentiellement

un homopolymère de propylène ou
un copolymère

d'éthylène et de propylène ou
d'éthylène et de butylène-1 ou
de propylène et de butylène-1 ou

un terpolymère

d'éthylène et de propylène et de butylène-1 ou

un mélange de deux des homopolymères, des copolymères et des terpolymères mentionnés ci-dessus comme étant particulièrement préférés ou plus,
ou un mélange homogène de deux des homopolymères, des copolymères et des terpolymères mentionnés ci-dessus comme étant particulièrement préférés ou plus, le cas échéant en mélange avec un ou plusieurs des homopolymères, des copolymères et des terpolymères mentionnés,
dans laquelle sont préférés en particulier, un homopolymère de propylène ou

des copolymères statistiques d'éthylène-propylène

possédant une teneur en éthylène de 2 à 10% en poids, de préférence de 5 à 8% en poids, ou

des copolymères statistiques de propylène-butylène-1

possédant une teneur en butylène de 4 à 25% en poids, de préférence de 10 à 20% en poids,

chaque fois rapportés au poids total du copolymère, ou encore
des terpolymères statistiques d'éthylène-propylène-butylène-1

possédant une teneur en éthylène de 1 à 10% en poids, de préférence de 2 à 6% en poids et
une teneur en butylène-1 de 3 à 20% en poids, de préférence de 8 à 10% en poids, chaque fois rapportés au poids total du terpolymère,
ou

un mélange homogène d'un terpolymère d'éthylène-propylène-butylène-1 et d'un copolymère de propylène-butylène-1

possédant une teneur en éthylène de 0,1 à 7% en poids,
et une teneur en propylène de 50 à 90% en poids,
et une teneur en butylène-1 de 10 à 40% en poids,
chaque fois rapportés au poids total du mélange homogène de polymères, et

le composant B du mélange homogène représente essentiellement

un homopolymère de propylène ou
un copolymère

d'éthylène et de propylène ou
d'éthylène et de butylène-1 ou
de propylène et de butylène-1 ou

un terpolymère

d'éthylène et de propylène et de butylène-1 ou

un mélange de deux des homopolymères, des copolymères et des terpolymères mentionnés comme étant particulièrement préférés ou plus, ou encore un mélange homogène de deux des homopolymères, des copolymères et des terpolymères mentionnés comme étant particulièrement préférés ou plus,
dans laquelle sont préférés en particulier, un homopolymère de propylène ou

des copolymères statistiques d'éthylène-propylène

possédant une teneur en éthylène de 2 à 10% en poids, de préférence de 5 à 8% en poids, ou

des copolymères statistiques de propylène-butylène-1

possédant une teneur en butylène de 4 à 25% en poids, de préférence de 10 à 20% en poids,

chaque fois rapportés au poids total du copolymère, ou
des terpolymères statistiques d'éthylène-propylène-butylène-1

possédant une teneur en éthylène de 1 à 10% en poids, de préférence de 2 à 6% en poids et
une teneur en butylène-1 de 3 à 20% en poids, de préférence de 8 à 10% en poids, chaque fois rapportés au poids total du terpolymère,
ou

un mélange homogène d'un terpolymère d'éthylène-propylène-butylène-1 et d'un copolymère de propylène-butylène-1

possédant une teneur en éthylène de 0,1 à 7% en poids,
et une teneur en propylène de 50 à 90% en poids,
et une teneur en butylène-1 de 10 à 40% en poids,
chaque fois rapportés au poids total du mélange homogène de polymères.

3. Feuille multicouche en polypropylène selon les revendications 1 et/ou 2, caractérisée en ce que le HDPE possède une valeur MFI (50 N/190°C) de plus de 1 à 50 g/10 min (mesurée conformément à la norme DIN 53735), un indice de viscosité de 100 à 450 $cm^3/g$ (mesuré conformément à la norme DIN 53728, partie 4), une densité de 0,93 à 0,97 $g/cm^3$ (mesurée conformément à la norme DIN 53479, procédé A), un degré de cristallisation de 35 à 80% et un point de fusion de 120 à 150°C conformément à une mesure par calorimétrie par analyse différentielle.

4. Feuille multicouche en polypropylène selon une ou plusieurs des revendications 1 à 3, caractérisée en ce que le rapport des composants A et a du mélange homogène se situe dans le domaine de A:B = 20:80 à A:B = 80:20, de préférence entre A:B = 40:60 et A:B = 60:40.

5. Feuille multicouche en polypropylène selon une ou plusieurs des revendications 1 à 4, caractérisée en ce que le mélange homogène des composants A et B possède un indice de fluidité à chaud de 1,5 à 12 g/10 min, de préférence de 2,5 à 6 g/10 min (température de 230°C sous une charge de 21,6 N).

6. Feuille multicouche en polypropylène selon une ou plusieurs des revendications 1 à 5, caractérisée en ce que le rapport des composants I et II se situe dans le domaine de I:II = 90:10 à I:II = 10:90.

7. Feuille multicouche en polypropylène selon une ou plusieurs des revendications 1 à 6, caractérisée en ce que le polymère de propylène de la couche de base possède un point de fusion d'au moins 140°C et un indice de fluidité à chaud qui se situe dans le domaine de 0,5 à 15 g/10 min.

8. Feuille multicouche en polypropylène selon une ou plusieurs des revendications 1 à 7, caractérisée en ce que la couche de base contient, à titre de matières de charge, des particules solides déclenchant la formation de vacuoles, de préférence du $CaCO_3$ ou des polymères incompatibles et/ou des pigments, de préférence du $TiO_2$.

9. Feuille multicouche en polypropylène selon la revendication 8, caractérisée en ce que les particules solides possèdent un diamètre moyen de particules $\geq 1$ µm et les pigments présentent un diamètre moyen de particules $< 1$ µm.

10. Feuille multicouche en polypropylène selon une ou plusieurs des revendications 1 à 9, caractérisée en ce que la couche de base contient, à titre de matières de charge, uniquement des pigments, de préférence du $TiO_2$ en une quantité de 2 à 25% en poids et la densité de la feuille s'élève à une valeur SSge$$ 0,9 g/cm$^3$.

11. Feuille multicouche en polypropylène selon une ou plusieurs des revendications 1 à 9, caractérisée en ce que la couche de base contient, à titre de matières de charge, uniquement des particules solides, de préférence du $CaCO_3$ en une quantité de 1 à 25% en poids et la densité de la feuille s'élève de 0,4 à 0,85 g/cm$^3$.

12. Feuille multicouche en polypropylène selon la revendication 11, caractérisée en ce que les particules solides sont contenues dans la couche de base en une quantité de 2 à 5% en poids et la densité de la feuille s'élève de 0,7 à 0,85 g/cm$^3$.

13. Feuille multicouche en polypropylène selon la revendication 11, caractérisée en ce que les particules solides sont contenues dans la couche de base en une quantité de 9 à 14% en poids et la densité de la feuille s'élève de 0,4 à 0,7 g/cm$^3$.

14. Feuille multicouche en polypropylène selon une ou plusieurs des revendications 1 à 9, caractérisée en ce que la couche de base contient, à titre de matières de charge, des particules solides, de préférence du $CaCO_3$, en une quantité de 1 à 10% en poids et des pigments, de préférence du $TiO_2$, en une quantité de 1 à 7% en poids, la densité de la feuille s'élevant de 0,6 à 0,85 g/cm$^3$.

15. Feuille multicouche en polypropylène selon une ou plusieurs des revendications 1 à 14, caractérisée en ce que la couche intermédiaire contient, à titre de matières de charge, des particules solides et/ou des pigments.

16. Feuille multicouche en polypropylène selon une ou plusieurs des revendications 1 à 14, caractérisée en ce que la couche intermédiaire ne contient que des particules solides, de préférence du $CaCO_3$ ou du $SiO_2$, en une quantité de 1 à 25% en poids et est essentiellement exempte de vacuoles.

17. Feuille multicouche en polypropylène selon une ou plusieurs des revendications 1 à 14, caractérisée en ce que la couche intermédiaire ne contient que des pigments, de préférence du $TiO_2$, en une quantité de 2 à 25% en poids.

18. Feuille multicouche en polypropylène selon une ou plusieurs des revendications 1 à 14, caractérisée en ce que la couche intermédiaire contient des particules solides, de préférence du $CaCO_3$ ou du $SiO_2$, en une quantité de 1 à 20% en poids et des pigments, de préférence du $TiO_2$, en une quantité de 1 à 20% en poids.

19. Feuille multicouche en polypropylène selon une ou plusieurs des revendications 1 à 18, caractérisée en ce que la couche de recouvrement contient essentiellement

un homopolymère de propylène ou
un copolymère

d'éthylène et de propylène ou
d'éthylène et de butylène-1 ou
de propylène et de butylène-1 ou

un terpolymère

d'éthylène et de propylène et de butylène-1 ou

un mélange de deux des homopolymères, des copolymères et des terpolymères mentionnés ci-dessus comme étant particulièrement préférés ou plus,
ou un mélange homogène de deux des homopolymères, des copolymères et des terpolymères mentionnés ci-dessus comme étant particulièrement préférés ou plus, le cas échéant en mélange avec un ou plusieurs des homopolymères, des copolymères et des terpolymères mentionnés,
dans laquelle sont préférés en particulier, un homopolymère de propylène ou

des copolymères statistiques d'éthylène-propylène

possédant une teneur en éthylène de 2 à 10% en poids, de préférence de 5 à 8% en poids, ou

des copolymères statistiques de propylène-butylène-1

possédant une teneur en butylène de 4 à 25% en poids, de préférence de 10 à 20% en poids,

chaque fois rapportés au poids total du copolymère, ou encore
des terpolymères statistiques d'éthylène-propylène-butylène-1

possédant une teneur en éthylène de 1 à 10% en poids, de préférence de 2 à 6% en poids et
une teneur en butylène-1 de 3 à 20% en poids, de préférence de 8 à 10% en poids, chaque fois rapportés au poids total du terpolymère,
ou

un mélange homogène d'un terpolymère d'éthylène-propylène-butylène-1 et d'un copolymère de propylène-butylène-1

possédant une teneur en éthylène de 0,1 à 7% en poids,
et une teneur en propylène de 50 à 90% en poids,
et une teneur en butylène-1 de 10 à 40% en poids,
chaque fois rapportés au poids total du mélange homogène de polymères.

**20.** Feuille multicouche en polypropylène selon une ou plusieurs des revendications 1 à 19, caractérisée en ce que la couche de recouvrement et/ou la couche de base contient ou contiennent, à titre d'additifs, des agents s'opposant à l'adhérence de contact entre feuilles et/ou des agents antistatiques et/ou des agents de glissement et/ou des stabilisateurs et/ou des agents de neutralisation.

**21.** Feuille multicouche en polypropylène selon la revendication 1, caractérisée en ce qu'elle présente, sous un angle de mesure de 85°, un brillant inférieur à 80, de préférence de 25 à 65 sur le côté/les deux côtés mat(s), mesuré conformément à la norme ASTM-D 523-78.

**22.** Procédé pour la fabrication de la feuille multicouche en polypropylène selon la revendication 1, dans lequel on soumet à une coextrusion, à travers une filière pour feuilles, les masses fondues correspondant aux couches individuelles de la feuille, on tend la feuille soumise à une coextrusion par-dessus un rouleau tendeur dont la température se situe entre 20 et 100°C, on soumet la feuille à un étirage biaxe et avec un rapport d'étirage en direction longitudinale de 4:1 à 7:1 et avec un rapport d'étirage en direction transversale de 8:1 à 11:1, on soumet la feuille après son étirage biaxe à un thermofixage, on la soumet le cas échéant à un traitement par effluves négatives, puis on l'enroule, caractérisé en ce qu'on effectue l'étirage de la feuille en direction longitudinale à une température de 120 à 150°C et on effectue l'étirage en direction transversale à une température de 155 à 190°C, et en ce que la feuille présente au moins une surface mate.

23. Utilisation de la feuille multicouche en polypropylène selon une ou plusieurs des revendications 1 à 21 à titre de feuille d'emballage, de préférence à titre de feuille d'emballage imprimée, à titre de feuille de support pour une couche le cas échéant partiellement adhésive, à titre de feuille de support pour des systèmes d'enduction aqueux faisant office d'arrêt, pour la fabrication de stratifiés, pour la fabrication de stratifiés avec du papier, du carton, des métaux, des feuilles en matière synthétique métallisées ou des feuilles en matière synthétique à titre de remplacement du papier, dans le procédé d'étiquetage dans le moule (In-mould-Labelling), à titre de feuilles d'arrêt ou à titre d'emballages à un constituant indépendant pour des cigarettes.

24. Stratifiés contenant une feuille multicouche en polypropylène selon une ou plusieurs des revendications 1 à 21.

25. Emballages contenant une feuille multicouche en polypropylène selon une ou plusieurs des revendications 1 à 21.

26. Systèmes d'arrêt à l'état enduit contenant une feuille multicouche en polypropylène selon une ou plusieurs des revendications 1 à 21.

27. Etiquette comprenant une feuille multicouche en polypropylène selon une ou plusieurs des revendications 1 à 21.